(19) **Europäisches Patentamt / European Patent Office / Office européen des brevets**

(11) **EP 4 044 445 A1**

(12) # EUROPEAN PATENT APPLICATION
published in accordance with Art. 153(4) EPC

(43) Date of publication:
**17.08.2022 Bulletin 2022/33**

(21) Application number: **20882840.0**

(22) Date of filing: **29.10.2020**

(51) International Patent Classification (IPC):
**H04B 7/0456** (2017.01)     **H04B 17/30** (2015.01)

(52) Cooperative Patent Classification (CPC):
**H04B 7/0456; H04B 17/30**

(86) International application number:
**PCT/CN2020/124884**

(87) International publication number:
**WO 2021/083285 (06.05.2021 Gazette 2021/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.10.2019 CN 201911040510**

(71) Applicant: **Huawei Technologies Co., Ltd.**
**Longgang District**
**Shenzhen, Guangdong**
**518129 (CN)**

(72) Inventors:
- **LIU, Xianda**
  **Shenzhen, Guangdong 518129 (CN)**
- **LIU, Kunpeng**
  **Shenzhen, Guangdong 518129 (CN)**
- **ZHANG, Leiming**
  **Shenzhen, Guangdong 518129 (CN)**

(74) Representative: **Körber, Martin Hans**
**Mitscherlich PartmbB**
**Patent- und Rechtsanwälte**
**Sonnenstraße 33**
**80331 München (DE)**

(54) **CHANNEL MEASUREMENT METHOD AND USER EQUIPMENT**

(57)     Embodiments of the present invention provide a channel measurement method, user equipment, and a codebook indication method, to reduce calculation complexity of the user equipment or a terminal by specifying a precoding numbering sequence. Embodiments of the present invention further provide user equipment. The technical solutions provided in embodiments of the present invention can optimize indication of a codebook, to reduce resources and improve channel performance.

300

302

Send first transmission parameter control information based on a codebook subset configuration and an index value set corresponding to the codebook subset configuration

304

Receive the first transmission parameter control information, and decode the first transmission parameter control information based on the codebook subset configuration and the index value set corresponding to the codebook subset configuration

FIG. 2

**Description**

**TECHNICAL FIELD**

Embodiments of the present invention relate to channel measurement technologies, and in particular, to a channel measurement method and user equipment.

**BACKGROUND**

A codebook-based uplink transmission mode is supported in new radio (new radio, NR) of a 5th-generation (5th-Generation, 5G) mobile communication technology. A base station may configure at least one sounding reference signal (Sounding Reference Signal, SRS) resource through higher-layer signaling. User equipment (User equipment, UE) sends an SRS on the SRS resource based on the SRS resource configured by the base station and indication signaling. The base station receives and measures the SRS sent by the user equipment. When the base station schedules the user equipment for uplink data sending, downlink control information (Downlink control information, DCI) is used to indicate an SRS resource indication (SRS resource indication, SRI), a transmission rank indication (Transmission rank indication, TRI), and a transmitted precoding matrix indicator (Transmission precoding matrix indication, TPMI). The UE determines, based on the indication information, a quantity of transmission layers and a precoding scheme for data sending. The TRI and the TPMI may be jointly coded. In other words, both a quantity of transmission layers and precoding matrix information can be indicated by a state in a DCI field. The quantity of transmission layers may be selected from a set {1, 2, 3, 4} and indicated, and a TPMI ($W$) is selected and indicated based on Table 1 to Table 7. A row of a matrix corresponds to a PUSCH transmission antenna port or an SRS port, and a column of the matrix corresponds to a transmission layer. Modulated and coded information bits $[y^{(0)}(i) \ldots y^{(\upsilon-1)}(i)]^T$ are sent after the following precoding operation is performed on them, where $i = 0,1,\ldots, M_{\text{symb}}^{\text{layer}} - 1$.

$$
\begin{bmatrix}
z^{(p_0)}(i) \\
\vdots \\
z^{(p_{\rho-1})}(i)
\end{bmatrix}
= W
\begin{bmatrix}
y^{(0)}(i) \\
\vdots \\
y^{(\upsilon-1)}(i)
\end{bmatrix}
$$

$i = 0,1,\ldots, M_{\text{symb}}^{\text{ap}} - 1$ , $M_{\text{symb}}^{\text{ap}} = M_{\text{symb}}^{\text{layer}}$ , and $\{p_0,\ldots,p_{\rho-1}\}$ corresponds to the PUSCH transmission antenna port or the SRS port.

**Table 1 One-layer transmission (rank=1) codebook for 4Tx (a quantity of SRS ports is four) in the case of discrete Fourier transform-spread OFDM (DFT-s-OFDM) waveform**

| TPMI index | W (ordered from left to right in increasing order) | | | | | | | |
|---|---|---|---|---|---|---|---|---|
| 0 to 7 | $\frac{1}{2}\begin{bmatrix}1\\0\\0\\0\end{bmatrix}$ | $\frac{1}{2}\begin{bmatrix}0\\1\\0\\0\end{bmatrix}$ | $\frac{1}{2}\begin{bmatrix}0\\0\\1\\0\end{bmatrix}$ | $\frac{1}{2}\begin{bmatrix}0\\0\\0\\1\end{bmatrix}$ | $\frac{1}{2}\begin{bmatrix}1\\0\\1\\0\end{bmatrix}$ | $\frac{1}{2}\begin{bmatrix}1\\0\\-1\\0\end{bmatrix}$ | $\frac{1}{2}\begin{bmatrix}1\\0\\j\\0\end{bmatrix}$ | $\frac{1}{2}\begin{bmatrix}1\\0\\-j\\0\end{bmatrix}$ |
| 8 to 15 | $\frac{1}{2}\begin{bmatrix}0\\1\\0\\1\end{bmatrix}$ | $\frac{1}{2}\begin{bmatrix}0\\1\\0\\-1\end{bmatrix}$ | $\frac{1}{2}\begin{bmatrix}0\\1\\0\\j\end{bmatrix}$ | $\frac{1}{2}\begin{bmatrix}0\\1\\0\\-j\end{bmatrix}$ | $\frac{1}{2}\begin{bmatrix}1\\1\\1\\-1\end{bmatrix}$ | $\frac{1}{2}\begin{bmatrix}1\\1\\j\\j\end{bmatrix}$ | $\frac{1}{2}\begin{bmatrix}1\\1\\-1\\1\end{bmatrix}$ | $\frac{1}{2}\begin{bmatrix}1\\1\\-j\\-j\end{bmatrix}$ |
| 16 to 23 | $\frac{1}{2}\begin{bmatrix}1\\j\\1\\j\end{bmatrix}$ | $\frac{1}{2}\begin{bmatrix}1\\j\\j\\1\end{bmatrix}$ | $\frac{1}{2}\begin{bmatrix}1\\j\\-1\\-j\end{bmatrix}$ | $\frac{1}{2}\begin{bmatrix}1\\j\\-j\\-1\end{bmatrix}$ | $\frac{1}{2}\begin{bmatrix}1\\-1\\1\\1\end{bmatrix}$ | $\frac{1}{2}\begin{bmatrix}1\\-1\\j\\-j\end{bmatrix}$ | $\frac{1}{2}\begin{bmatrix}1\\-1\\-1\\-1\end{bmatrix}$ | $\frac{1}{2}\begin{bmatrix}1\\-1\\-j\\j\end{bmatrix}$ |

(continued)

| TPMI index | W (ordered from left to right in increasing order) | | | | | | | |
|---|---|---|---|---|---|---|---|---|
| 24 to 27 | $\frac{1}{2}\begin{bmatrix} 1 \\ -j \\ 1 \\ -j \end{bmatrix}$ | $\frac{1}{2}\begin{bmatrix} 1 \\ -j \\ j \\ -1 \end{bmatrix}$ | $\frac{1}{2}\begin{bmatrix} 1 \\ -j \\ -1 \\ j \end{bmatrix}$ | $\frac{1}{2}\begin{bmatrix} 1 \\ -j \\ -j \\ 1 \end{bmatrix}$ | - | - | - | - |

**Table 2 One-layer transmission (rank=1) codebook for 4Tx (a quantity of SRS ports is four) the case of cyclic prefix-orthogonal frequency division multiplexing (Cyclic Prefix-Orthogonal Frequency Division Multiplexing, CP-OFDM) waveform**

| TPMI index | W (ordered from left to right in increasing order) | | | | | | | |
|---|---|---|---|---|---|---|---|---|
| 0 to 7 | $\frac{1}{2}\begin{bmatrix}1\\0\\0\\0\end{bmatrix}$ | $\frac{1}{2}\begin{bmatrix}0\\1\\0\\0\end{bmatrix}$ | $\frac{1}{2}\begin{bmatrix}0\\0\\1\\0\end{bmatrix}$ | $\frac{1}{2}\begin{bmatrix}0\\0\\0\\1\end{bmatrix}$ | $\frac{1}{2}\begin{bmatrix}1\\0\\1\\0\end{bmatrix}$ | $\frac{1}{2}\begin{bmatrix}1\\0\\-1\\0\end{bmatrix}$ | $\frac{1}{2}\begin{bmatrix}1\\0\\j\\0\end{bmatrix}$ | $\frac{1}{2}\begin{bmatrix}1\\0\\-j\\0\end{bmatrix}$ |
| 8 to 15 | $\frac{1}{2}\begin{bmatrix}0\\1\\0\\1\end{bmatrix}$ | $\frac{1}{2}\begin{bmatrix}0\\1\\0\\-1\end{bmatrix}$ | $\frac{1}{2}\begin{bmatrix}0\\1\\0\\j\end{bmatrix}$ | $\frac{1}{2}\begin{bmatrix}0\\1\\0\\-j\end{bmatrix}$ | $\frac{1}{2}\begin{bmatrix}1\\1\\1\\1\end{bmatrix}$ | $\frac{1}{2}\begin{bmatrix}1\\1\\j\\j\end{bmatrix}$ | $\frac{1}{2}\begin{bmatrix}1\\1\\-1\\-1\end{bmatrix}$ | $\frac{1}{2}\begin{bmatrix}1\\1\\-j\\-j\end{bmatrix}$ |
| 16 to 23 | $\frac{1}{2}\begin{bmatrix}1\\j\\1\\j\end{bmatrix}$ | $\frac{1}{2}\begin{bmatrix}1\\j\\j\\-1\end{bmatrix}$ | $\frac{1}{2}\begin{bmatrix}1\\j\\-1\\-j\end{bmatrix}$ | $\frac{1}{2}\begin{bmatrix}1\\j\\-j\\1\end{bmatrix}$ | $\frac{1}{2}\begin{bmatrix}1\\-1\\1\\-1\end{bmatrix}$ | $\frac{1}{2}\begin{bmatrix}1\\-1\\j\\-j\end{bmatrix}$ | $\frac{1}{2}\begin{bmatrix}1\\-1\\-1\\1\end{bmatrix}$ | $\frac{1}{2}\begin{bmatrix}1\\-1\\-j\\j\end{bmatrix}$ |
| 24 to 27 | $\frac{1}{2}\begin{bmatrix}1\\-j\\1\\-j\end{bmatrix}$ | $\frac{1}{2}\begin{bmatrix}1\\-j\\j\\1\end{bmatrix}$ | $\frac{1}{2}\begin{bmatrix}1\\-j\\-1\\j\end{bmatrix}$ | $\frac{1}{2}\begin{bmatrix}1\\-j\\-j\\-1\end{bmatrix}$ | - | - | - | - |

**Table 3 Two-layer transmission (rank=2) codebook for 4Tx (a quantity of SRS ports is four)**

| TPMI index | W (ordered from left to right in increasing order) | | | |
|---|---|---|---|---|
| 0 to 3 | $\frac{1}{2}\begin{bmatrix}1 & 0\\0 & 1\\0 & 0\\0 & 0\end{bmatrix}$ | $\frac{1}{2}\begin{bmatrix}1 & 0\\0 & 0\\0 & 1\\0 & 0\end{bmatrix}$ | $\frac{1}{2}\begin{bmatrix}1 & 0\\0 & 0\\0 & 0\\0 & 1\end{bmatrix}$ | $\frac{1}{2}\begin{bmatrix}0 & 0\\1 & 0\\0 & 1\\0 & 0\end{bmatrix}$ |
| 4 to 7 | $\frac{1}{2}\begin{bmatrix}0 & 0\\1 & 0\\0 & 0\\0 & 1\end{bmatrix}$ | $\frac{1}{2}\begin{bmatrix}0 & 0\\0 & 0\\1 & 0\\0 & 1\end{bmatrix}$ | $\frac{1}{2}\begin{bmatrix}1 & 0\\0 & 1\\1 & 0\\0 & -j\end{bmatrix}$ | $\frac{1}{2}\begin{bmatrix}1 & 0\\0 & 1\\1 & 0\\0 & j\end{bmatrix}$ |
| 8 to 11 | $\frac{1}{2}\begin{bmatrix}1 & 0\\0 & 1\\-j & 0\\0 & 1\end{bmatrix}$ | $\frac{1}{2}\begin{bmatrix}1 & 0\\0 & 1\\-j & 0\\0 & -1\end{bmatrix}$ | $\frac{1}{2}\begin{bmatrix}1 & 0\\0 & 1\\-1 & 0\\0 & -j\end{bmatrix}$ | $\frac{1}{2}\begin{bmatrix}1 & 0\\0 & 1\\-1 & 0\\0 & j\end{bmatrix}$ |
| 12 to 15 | $\frac{1}{2}\begin{bmatrix}1 & 0\\0 & 1\\j & 0\\0 & 1\end{bmatrix}$ | $\frac{1}{2}\begin{bmatrix}1 & 0\\0 & 1\\j & 0\\0 & -1\end{bmatrix}$ | $\frac{1}{2\sqrt{2}}\begin{bmatrix}1 & 1\\1 & 1\\1 & -1\\1 & -1\end{bmatrix}$ | $\frac{1}{2\sqrt{2}}\begin{bmatrix}1 & 1\\1 & 1\\j & -j\\j & -j\end{bmatrix}$ |
| 16 to 19 | $\frac{1}{2\sqrt{2}}\begin{bmatrix}1 & 1\\j & j\\1 & -1\\j & -j\end{bmatrix}$ | $\frac{1}{2\sqrt{2}}\begin{bmatrix}1 & 1\\j & j\\j & -j\\-1 & 1\end{bmatrix}$ | $\frac{1}{2\sqrt{2}}\begin{bmatrix}1 & 1\\-1 & -1\\1 & -1\\-1 & 1\end{bmatrix}$ | $\frac{1}{2\sqrt{2}}\begin{bmatrix}1 & 1\\-1 & -1\\j & -j\\-j & j\end{bmatrix}$ |
| 20 and 21 | $\frac{1}{2\sqrt{2}}\begin{bmatrix}1 & 1\\-j & -j\\1 & -1\\-j & j\end{bmatrix}$ | $\frac{1}{2\sqrt{2}}\begin{bmatrix}1 & 1\\-j & -j\\j & -j\\1 & -1\end{bmatrix}$ | - | - |

**Table 4 Three-layer transmission (rank=3) codebook**

| TPMI index | W (ordered from left to right in increasing order) | | | |
|---|---|---|---|---|
| 0 to 3 | $\frac{1}{2}\begin{bmatrix}1 & 0 & 0\\0 & 1 & 0\\0 & 0 & 1\\0 & 0 & 0\end{bmatrix}$ | $\frac{1}{2}\begin{bmatrix}1 & 0 & 0\\0 & 1 & 0\\1 & 0 & 0\\0 & 0 & 1\end{bmatrix}$ | $\frac{1}{2}\begin{bmatrix}1 & 0 & 0\\0 & 1 & 0\\-1 & 0 & 0\\0 & 0 & 1\end{bmatrix}$ | $\frac{1}{2\sqrt{3}}\begin{bmatrix}1 & 1 & 1\\1 & -1 & 1\\1 & 1 & -1\\1 & -1 & -1\end{bmatrix}$ |
| 4 to 6 | $\frac{1}{2\sqrt{3}}\begin{bmatrix}1 & 1 & 1\\1 & -1 & 1\\j & j & -j\\j & -j & -j\end{bmatrix}$ | $\frac{1}{2\sqrt{3}}\begin{bmatrix}1 & 1 & 1\\-1 & 1 & -1\\1 & 1 & -1\\-1 & 1 & 1\end{bmatrix}$ | $\frac{1}{2\sqrt{3}}\begin{bmatrix}1 & 1 & 1\\-1 & 1 & -1\\j & j & -j\\-j & j & j\end{bmatrix}$ | - |

**Table 5 Four-layer transmission (rank=4) codebook**

| TPMI index | W (ordered from left to right in increasing order) | | | |
|---|---|---|---|---|
| 0 to 3 | $\frac{1}{2}\begin{bmatrix} 1 & 0 & 0 & 0 \\ 0 & 1 & 0 & 0 \\ 0 & 0 & 1 & 0 \\ 0 & 0 & 0 & 1 \end{bmatrix}$ | $\frac{1}{2\sqrt{2}}\begin{bmatrix} 1 & 1 & 0 & 0 \\ 0 & 0 & 1 & 1 \\ 1 & -1 & 0 & 0 \\ 0 & 0 & 1 & -1 \end{bmatrix}$ | $\frac{1}{2\sqrt{2}}\begin{bmatrix} 1 & 1 & 0 & 0 \\ 0 & 0 & 1 & 1 \\ j & -j & 0 & 0 \\ 0 & 0 & j & -j \end{bmatrix}$ | $\frac{1}{4}\begin{bmatrix} 1 & 1 & 1 & 1 \\ 1 & -1 & 1 & -1 \\ 1 & 1 & -1 & -1 \\ 1 & -1 & -1 & 1 \end{bmatrix}$ |
| 4 | $\frac{1}{4}\begin{bmatrix} 1 & 1 & 1 & 1 \\ 1 & -1 & 1 & -1 \\ j & j & -j & -j \\ j & -j & -j & j \end{bmatrix}$ | - | - | - |

**Table 6 One-layer transmission (rank=1) codebook for 2Tx (a quantity of SRS ports is two)**

| TPMI index | W (ordered from left to right in increasing order) | | | | | | | |
|---|---|---|---|---|---|---|---|---|
| 0 to 5 | $\frac{1}{\sqrt{2}}\begin{bmatrix} 1 \\ 0 \end{bmatrix}$ | $\frac{1}{\sqrt{2}}\begin{bmatrix} 0 \\ 1 \end{bmatrix}$ | $\frac{1}{\sqrt{2}}\begin{bmatrix} 1 \\ 1 \end{bmatrix}$ | $\frac{1}{\sqrt{2}}\begin{bmatrix} 1 \\ -1 \end{bmatrix}$ | $\frac{1}{\sqrt{2}}\begin{bmatrix} 1 \\ j \end{bmatrix}$ | $\frac{1}{\sqrt{2}}\begin{bmatrix} 1 \\ -j \end{bmatrix}$ | - | - |

**Table 7 Two-layer transmission (rank=2) codebook for 2Tx (a quantity of SRS ports is two)**

| TPMI index | W (ordered from left to right in increasing order) | | |
|---|---|---|---|
| 0 to 2 | $\frac{1}{\sqrt{2}}\begin{bmatrix} 1 & 0 \\ 0 & 1 \end{bmatrix}$ | $\frac{1}{2}\begin{bmatrix} 1 & 1 \\ 1 & -1 \end{bmatrix}$ | $\frac{1}{2}\begin{bmatrix} 1 & 1 \\ j & -j \end{bmatrix}$ |

The TPMIs 0 to 3 in Table 1 and Table 2, the TPMIs 0 to 5 in Table 3, the TPMIs 0 in Table 4 and Table 5, the TPMIs 0 and 1 in Table 6, and the TPMI 0 in Table 7 are non-coherent codewords. For example, each column in a matrix has only one non-zero element. The TPMIs 6 to 11 in Table 1 and Table 2, the TPMIs 6 to 13 in Table 3, the TPMIs 1 and 2 in Table 4, and the TPMIs 1 and 2 in Table 5 are partially-coherent codewords. For example, each column in a matrix has two non-zero elements and two zero elements. TPMIs other than the foregoing TPMIs are fully-coherent codeword. For example, all elements in each column of a matrix are non-zero elements.

A terminal device reports coherent capabilities among transmit antennas. Coherent capabilities of a terminal device that supports a maximum of two antenna ports include a fully-coherent (fully-coherent) capability and a non-coherent (non-coherent) capability. The fully-coherent (fully-coherent) capability indicates that phase alignment is completed between the two transmit antenna ports of the terminal device, and phase weighting can be performed, that is, two transmit antennas can be used to send data at a same layer. The non-coherent (non-coherent) capability indicates that phase alignment is not completed between the two transmit antennas of the terminal device, and phase weighting cannot be performed to send data at a same layer, that is, only one antenna can be used to send data at a same layer. If the terminal device supports a maximum of two antenna ports reports the non-coherent capability, the terminal device can support only the TPMIs 0 and 1 in Table 6 and the TPMI 0 in Table 7. Optionally, the terminal device may further support the TPMI 2 used to enable full-power PUSCH transmission. If the terminal device reports the fully-coherent capability, the terminal device can support all the TPMIs in Table 6 and Table 7.

Coherent capabilities of a terminal device that supports a maximum of four antenna ports include a fully-coherent (fully-coherent) capability, a partially-coherent (partially-coherent) capability, and a non-coherent (non-coherent) capability. The fully-coherent (fully-coherent) capability indicates that phase alignment is completed among all transmit antennas of the UE, and phase weighting can be performed. In other words, all the antennas of the UE can send data at a same layer. For example, all the TPMIs in Table 1 to Table 5 can be supported. The partially-coherent (partially-coherent) capability indicates that phase alignment is completed between pairwise transmit antennas of the UE, and phase weighting can be performed. However, phase alignment is not completed between groups of the pairwise transmit antennas of the UE, and phase weighting cannot be performed. In other words, two transmit antennas in an antenna group can send data at a same layer. For example, the TPMIs 0 to 11 in Table 1 and Table 2, the TPMIs 0 to 13 in Table 3, and the TPMIs 0 to 2 in Table 4 and Table 5 can be supported. Optionally, the TPMIs 12 to 15 in Table 1 and Table 2 may further be supported, or the TPMIs 16 to 19 in Table 1 can further be supported. These TPMIs are used to enable full-power PUSCH transmission. In this case, the terminal device cannot maintain a phase between antennas that is indicated by the base station. The non-coherent (non-coherent) capability indicates that phase alignment is not completed among the four transmit antennas of the UE, and phase weighting cannot be performed to send a same data layer. In other words, only one antenna can be used to send data at a same layer. For example, the TPMIs 0 to 3 in Table 1 and Table 2, the TPMIs 0 to 5 in Table 3, and the TPMIs 0 in Table 4 and Table 5 can be supported. Optionally, the TPMIs 13 in Table 1 and Table 2, the TPMI 6 in Table 3, and the TPMI 1 in Table 4 can further be supported. These TPMIs are used to enable full-power PUSCH transmission. In this case, the terminal device cannot maintain a phase between antennas that is indicated by the base station.

## SUMMARY

Generally, user equipment (including but not limited to a terminal device such as a smartphone) sends an uplink reference signal (including but not limited to a sounding reference signal (Sounding Reference Signal, SRS)). An access device (including but not limited to a base station) receives the uplink reference signal, performs uplink channel measurement based on the uplink reference signal, determines an uplink transmission parameter, and notifies the user equipment of the uplink transmission parameter based on downlink control information (Downlink Control Information, DCI) or the like. The uplink transmission parameter may include at least one of the following parameters: a channel quality indicator (Channel Quality Indicator, CQI), a rank indication (Rank Indication, RI), a precoding matrix indicator (Precoding Matrix Indicator, PMI), and the like.

In the technical solutions provided in embodiments of the present invention, transmission parameters are organized using an index value set. Specifically, each codebook subset configuration corresponds to an index value set. When determining an index value used for a currently scheduled PUSCH (namely, an index value indicated by transmission parameter indication information), the access device may traverse all index values in an index value set corresponding to a current coherent capability, and determine the selected index value according to a channel capacity maximization principle, a channel throughput maximization principle, or another principle.

For a specific process of determining the foregoing information, refer to conventional technologies. For example, the access device may select a precoding matrix from a preset codebook according to the channel capacity maximization principle, the channel throughput maximization principle, or another principle, and use a quantity of columns of the precoding matrix as a rank.

According to a first aspect, a transmission parameter indication method is provided. The method includes:

generating transmission parameter indication information, where the transmission parameter indication information is used to indicate an index value selected from an index value set corresponding to a current codebook subset configuration, and the index value is used to indicate a quantity of transmission layers and a precoding matrix; and sending the transmission parameter indication information.

The transmission parameter indication method may be performed by an access device (such as a base station).

The selected index value may be sent by using DCI.

With reference to the first aspect, in a first possible implementation of the first aspect, the index value includes an index of the index value, a value of the quantity of transmission layers, and an index of the precoding matrix, and the precoding matrix is determined based on both the value of the quantity of transmission layers and the index of the precoding matrix. For example, when the value of the quantity of transmission layers is 1, an index 1 indicates a matrix A; or when the value of the quantity of transmission layers is 2, the index 1 indicates a matrix B. Therefore, the precoding matrix is determined based on both the value of the quantity of transmission layers and the index of the precoding matrix.

With reference to the first aspect, the codebook subset configuration is determined based on a coherent capability.

With reference to the first aspect, the codebook subset configuration includes a first codebook subset and a second codebook subset.

With reference to the first aspect, in a second possible implementation of the first aspect, the coherent capability is one of the following capabilities:

a semi-coherent capability; and
a non-coherent capability.

With reference to the first aspect, the first codebook subset includes a non-coherent codeword and a part of a partially-coherent codeword or a fully-coherent codeword. The non-coherent codeword means that there is only one non-zero element for each layer of a precoding matrix. The partially-coherent codeword means that there are some non-zero elements for each layer of a precoding matrix. The fully-coherent codeword means that there are all non-zero elements for each layer of a precoding matrix. A manner of including only a part of a partially -coherent codeword or a fully-coherent codeword is that the first codebook subset includes a partially-coherent codeword or a fully-coherent codeword in ranks 1 to 3. The second codebook subset includes a non-coherent codeword, a partially-coherent codeword, and a part of a fully-coherent codeword. A manner of including only a part of a fully-coherent codeword is that the second codebook subset includes a part of a fully-coherent codeword in a rank 1.

With reference to the first aspect, the first codebook subset corresponds to a terminal device having a non-coherent capability, and the second codebook subset corresponds to a terminal device having a partially-coherent capability. Specifically, the terminal device having the non-coherent capability may configure the first codebook subset, and the terminal device having the partially-coherent capability may configure the second codebook subset.

With reference to the first aspect, that the first codebook subset corresponds to a terminal device having a partially-coherent capability specifically means that the terminal device having the partially-coherent capability may further configure the first codebook subset.

With reference to the first aspect, an index value set corresponding to each codebook subset configuration includes at least one index value, and an index value set corresponding to the first codebook subset is a subset of an index value set corresponding to the second codebook subset. Specifically, an index value set corresponding to a first codebook subset configuration includes M first index values, and an index value set corresponding to a second codebook subset configuration includes N second index values, where the M first index values include M natural numbers from 0 to M-1, the N second index values include N natural numbers from 0 to N-1, M is a positive integer greater than or equal to 1, and N is a positive integer greater than M.

Optionally, when any first index value m in the M first index values is the same as any second index value n in the N second index values, a value of a quantity of transmission layers and a precoding matrix indicator that correspond to the first index value m are the same as a value of a quantity of transmission layers and a precoding matrix indicator that correspond to the second index value n, and a precoding matrix associated with the precoding matrix indicator corresponding to the first index value m is the same as a precoding matrix associated with the precoding matrix indicator corresponding to the second index value n, where the first index value m and the second index value n are non-reserved index values, and the non-reserved index value corresponds to a value of a quantity of transmission layers and a precoding matrix indicator; and m is any natural number greater than or equal to 0 and less than M, and n is any natural number greater than or equal to 0 and less than N.

Optionally, combinations of a quantity of layers and a TPMI that are included in the index value set corresponding to the first codebook subset are all included in combinations of a quantity of layers and a TPMI that are included in the index value set corresponding to the second codebook subset.

Optionally, the precoding matrix is determined based on the value of the quantity of transmission layers, a specific waveform, and the precoding matrix indicator.

Optionally, the specific waveform includes a CP-OFDM waveform and a DFT-s-OFDM waveform.

With reference to the first aspect, the method further includes: receiving limitation information for a maximum quantity of transmission layers of a physical uplink shared channel PUSCH, where the limitation information for the maximum quantity of transmission layers is used to indicate a maximum quantity of transmission layers at which a second network device sends the PUSCH.

Optionally, a value of the maximum quantity of transmission layers is one of 1, 2, 3, or 4.

Optionally, for a same codebook subset configuration, index value sets corresponding to all values that are of the maximum quantity of transmission layers and that are greater than 2 are the same; index value sets corresponding to a value 1 of the maximum quantity of transmission layers are different from index value sets corresponding to all values that are of the maximum quantity of transmission layers and that are greater than 1; and index value sets corresponding to a value 2 of the maximum quantity of transmission layers are different from the index value sets corresponding to all the values that are of the maximum quantity of transmission layers and that are greater than 2.

Optionally, an index value set corresponding to a maximum quantity of transmission layers being 3 is the same as an index value set corresponding to a maximum quantity of transmission layers being 4.

Optionally, an index value set corresponding to a maximum quantity of transmission layers being 2, an index value set corresponding to a maximum quantity of transmission layers being 3, and an index value set corresponding to a maximum quantity of transmission layers being 4 are the same.

Optionally, an index value set corresponding to a maximum quantity of transmission layers being 1 is different from an index value set corresponding to a maximum quantity of transmission layers being 2, 3, or 4.

Optionally, an index value set corresponding to a maximum quantity of transmission layers being 2 is different from an index value set corresponding to a maximum quantity of transmission layers being 3 or 4.

Optionally, a value that corresponds to the index value indicated by the transmission parameter indication information and that is of the quantity of transmission layers is less than the value of the maximum quantity of transmission layers.

Optionally, when any fourth index value p in a fourth index value set corresponding to a value x of the maximum quantity of transmission layers is the same as any fifth index value q in a fifth index value set corresponding to a value y of the maximum quantity of transmission layers, a value of a quantity of transmission layers and a precoding matrix indicator that correspond to the fourth index value p are the same as a value of a quantity of transmission layers and a precoding matrix indicator that correspond to the fifth index value q, and a precoding matrix associated with the precoding matrix indicator corresponding to the fourth index value p is the same as a precoding matrix associated with the precoding matrix indicator corresponding to the fifth index value q, where x and y are positive integers greater than X and less than or equal to K, p is any natural number greater than or equal to 0 and less than P, q is any natural number greater than or equal to 0 and less than Q, P is a quantity of index values included in the fourth index value set, Q is a quantity of index values included in the fifth index value set, and the fourth index value p and the fifth index value q are non-reserved index values.

With reference to the first aspect, the method further includes:

generating coherent capability indication information, where the coherent capability indication information is used to indicate one of a non-coherent capability, a partially-coherent capability, and a fully-coherent capability. A network device may determine a codebook subset configuration based on the coherent capability indication information.

With reference to a possible implementation of the first aspect, a correspondence among the index value, the value of the quantity of transmission layers, and the precoding matrix indicator satisfies:

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |
| … | … | … | … |
| 3 | 1 layer: TPMI=3 | 3 | 1 layer: TPMI=3 |
| 4 | 1 layer: TPMI=13 | 4 | 1 layer: TPMI=13 |
| 5 | 1 layer: TPMI=4 | | |
| … | … | | |
| 13 | 1 layer: TPMI=12 | | |
| 14 | 1 layer: TPMI=14 | | |
| 15 | 1 layer: TPMI=15 | | |

With reference to a possible implementation of the first aspect, a correspondence among the index value, the value of the quantity of transmission layers, and the precoding matrix indicator may alternatively satisfy:

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |
| … | … | … | … |
| 3 | 1 layer: TPMI=3 | 3 | 1 layer: TPMI=3 |
| 4 | 2 layers: TPMI=0 | 4 | 2 layers: TPMI=0 |
| … | … | … | … |
| 9 | 2 layers: TPMI=5 | 9 | 2 layers: TPMI=5 |
| 10 | 3 layers: TPMI=0 | 10 | 3 layers: TPMI=0 |
| 11 | 4 layers: TPMI=0 | 11 | 4 layers: TPMI=0 |
| 12 | 1 layer: TPMI=13 | 12 | 1 layer: TPMI=13 |
| 13 | 2 layers: TPMI=6 | 13 | 2 layers: TPMI=6 |
| 14 | 3 layers: TPMI=1 | 14 | 3 layers: TPMI=1 |
| 15 | 1 layer: TPMI=4 | | |
| … | … | | |
| 23 | 1 layer: TPMI=12 | | |
| 24 | 1 layer: TPMI=14 | | |
| 25 | 1 layer: TPMI=15 | | |
| 26 | 2 layers: TPMI=7 | | |
| … | … | | |
| 32 | 2 layers: TPMI=13 | | |
| 33 | 3 layers: TPMI=2 | | |
| 34 | 4 layers: TPMI=1 | | |
| 35 | 4 layers: TPMI=2 | | |

or

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |
| ... | ... | ... | ... |
| 3 | 1 layer: TPMI=3 | 3 | 1 layer: TPMI=3 |
| 4 | 1 layer: TPMI=13 | 4 | 1 layer: TPMI=13 |
| 5 | 2 layers: TPMI=0 | 5 | 2 layers: TPMI=0 |
| ... | ... | ... | ... |
| 11 | 2 layers: TPMI=6 | 11 | 2 layers: TPMI=6 |
| 12 | 3 layers: TPMI=0 | 12 | 3 layers: TPMI=0 |
| 13 | 3 layers: TPMI=1 | 13 | 3 layers: TPMI=1 |
| 14 | 4 layers: TPMI=0 | 14 | 4 layers: TPMI=0 |
| 15 | 1 layer: TPMI=4 | | |
| ... | ... | | |
| 23 | 1 layer: TPMI=12 | | |
| 24 | 1 layer: TPMI=14 | | |
| 25 | 1 layer: TPMI=15 | | |
| 26 | 2 layers: TPMI=7 | | |
| ... | ... | | |
| 32 | 2 layers: TPMI=13 | | |
| 33 | 3 layers: TPMI=2 | | |
| 34 | 4 layers: TPMI=1 | | |
| 35 | 4 layers: TPMI=2 | | |

With reference to a possible implementation of the first aspect, a correspondence among the index value, the value of the quantity of transmission layers, and the precoding matrix indicator may alternatively satisfy:

| Field index value | Second codebook subset configuration | Field index value | First codebook subset configuration |
|---|---|---|---|
| 0 | 1 layer: TPMI=0 | 0 | 1 layer: TPMI=0 |

| Field index value | Second codebook subset configuration | Field index value | First codebook subset configuration |
|---|---|---|---|
| 1 | 1 layer: TPMI=1 | 1 | 1 layer: TPMI=1 |
| … | … | … | … |
| 3 | 1 layer: TPMI=3 | 3 | 1 layer: TPMI=3 |
| 4 | 1 layer: TPMI=13 | 4 | 1 layer: TPMI=13 |
| 5 | 2 layers: TPMI=0 | 5 | 2 layers: TPMI=0 |
| … | … | … | … |
| 11 | 2 layers: TPMI=6 | 11 | 2 layers: TPMI=6 |
| 12 | 1 layer: TPMI=4 | | |
| … | … | | |
| 20 | 1 layer: TPMI=12 | | |
| 21 | 1 layer: TPMI=14 | | |
| 22 | 1 layer: TPMI=15 | | |
| 23 | 2 layers: TPMI=7 | | |
| … | … | | |
| 29 | 2 layers: TPMI=13 | | |

or

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |
| … | … | … | … |
| 3 | 1 layer: TPMI=3 | 3 | 1 layer: TPMI=3 |
| 4 | 2 layers: TPMI=0 | 4 | 2 layers: TPMI=0 |
| … | … | … | … |
| 9 | 2 layers: TPMI=5 | 9 | 2 layers: TPMI=5 |
| 10 | 1 layer: TPMI=13 | 10 | 1 layer: TPMI=13 |
| 11 | 2 layers: TPMI=6 | 11 | 2 layers: TPMI=6 |

| Field index value | Second codebook subset configuration | Field index value | First codebook subset configuration |
|---|---|---|---|
| 12 | 1 layer: TPMI=4 | | |
| … | … | | |
| 20 | 1 layer: TPMI=12 | | |
| 21 | 1 layer: TPMI=14 | | |
| 22 | 1 layer: TPMI=15 | | |
| 23 | 2 layers: TPMI=7 | | |
| … | … | | |
| 29 | 2 layers: TPMI=13 | | |

According to a second aspect, a transmission parameter indication method is provided. The method includes:

receiving transmission parameter indication information, where the transmission parameter indication information is used to indicate an index value selected from an index value set corresponding to a current coherent capability, and the index value is used to indicate a quantity of transmission layers and a precoding matrix; and
determining the quantity of transmission layers and the precoding matrix based on the transmission parameter indication information.

With reference to the second aspect, the index value includes an index of the index value, a value of the quantity of transmission layers, and an index of the precoding matrix, and the precoding matrix is determined based on both the value of the quantity of transmission layers and the index of the precoding matrix.

With reference to the second aspect, a codebook subset configuration includes a first codebook subset and a second codebook subset.

With reference to the second aspect, the current coherent capability is one of the following capabilities:

a semi-coherent capability; and
a non-coherent capability.

With reference to the second aspect, the first codebook subset includes a non-coherent codeword and a part of a partially-coherent codeword or a fully-coherent codeword. The non-coherent codeword means that there is only one non-zero element for each layer of a precoding matrix. The partially-coherent codeword means that there are some non-zero elements for each layer of a precoding matrix. The fully-coherent codeword means that there are all non-zero elements for each layer of a precoding matrix. A manner of including only a part of a partially-coherent codeword or a fully-coherent codeword is that the first codebook subset includes a partially-coherent codeword or a fully-coherent codeword in ranks 1 to 3. The second codebook subset includes a non-coherent codeword, a partially-coherent codeword, and a part of a fully-coherent codeword. A manner of including only a part of a fully-coherent codeword is that the second codebook subset includes a part of a fully-coherent codeword in a rank 1.

With reference to the second aspect, the first codebook subset corresponds to a terminal device having a non-coherent capability, and the second codebook subset corresponds to a terminal device having a partially-coherent capability. Specifically, the terminal device having the non-coherent capability may configure the first codebook subset, and the terminal device having the partially-coherent capability may configure the second codebook subset.

With reference to the second aspect, that the first codebook subset corresponds to a terminal device having a partially-coherent capability specifically means that the terminal device having the partially-coherent capability may further configure the first codebook subset.

With reference to the second aspect, an index value set corresponding to each codebook subset configuration includes at least one index value, and an index value set corresponding to the first codebook subset is a subset of an index value set corresponding to the second codebook subset. Specifically, an index value set corresponding to a first codebook subset configuration includes M first index values, and an index value set corresponding to a second codebook subset configuration includes N second index values, where the M first index values include M natural numbers from 0 to M-1, the N second index values include N natural numbers from 0 to N-1, M is a positive integer greater than or equal to 1, and N is a positive integer greater than M.

Optionally, when any first index value m in the M first index values is the same as any second index value n in the N second index values, a value of a quantity of transmission layers and a precoding matrix indicator that correspond to the first index value m are the same as a value of a quantity of transmission layers and a precoding matrix indicator that correspond to the second index value n, and a precoding matrix associated with the precoding matrix indicator corresponding to the first index value m is the same as a precoding matrix associated with the precoding matrix indicator corresponding to the second index value n, where the first index value m and the second index value n are non-reserved index values, and the non-reserved index value corresponds to a value of a quantity of transmission layers and a precoding matrix indicator; and m is any natural number greater than or equal to 0 and less than M, and n is any natural number greater than or equal to 0 and less than N.

Optionally, combinations of a quantity of layers and a TPMI that are included in the index value set corresponding to the first codebook subset are all included in combinations of a quantity of layers and a TPMI that are included in the index value set corresponding to the second codebook subset.

Optionally, the precoding matrix is determined based on the value of the quantity of transmission layers, a specific waveform, and the precoding matrix indicator.

Optionally, the specific waveform includes a CP-OFDM waveform and a DFT-s-OFDM waveform.

With reference to the second aspect, the method further includes: receiving limitation information for a maximum quantity of transmission layers of a physical uplink shared channel PUSCH, where the limitation information for the maximum quantity of transmission layers is used to indicate a maximum quantity of transmission layers at which a second network device sends the PUSCH.

Optionally, a value of the maximum quantity of transmission layers is one of 1, 2, 3, or 4.

Optionally, for a same codebook subset configuration, index value sets corresponding to all values that are of the maximum quantity of transmission layers and that are greater than 2 are the same; index value sets corresponding to a value 1 of the maximum quantity of transmission layers are different from index value sets corresponding to all values that are of the maximum quantity of transmission layers and that are greater than 1; and index value sets corresponding to a value 2 of the maximum quantity of transmission layers are different from the index value sets corresponding to all the values that are of the maximum quantity of transmission layers and that are greater than 2.

Optionally, an index value set corresponding to a maximum quantity of transmission layers being 3 is the same as an index value set corresponding to a maximum quantity of transmission layers being 4.

Optionally, an index value set corresponding to a maximum quantity of transmission layers being 2, an index value set corresponding to a maximum quantity of transmission layers being 3, and an index value set corresponding to a maximum quantity of transmission layers being 4 are the same.

Optionally, an index value set corresponding to a maximum quantity of transmission layers being 1 is different from an index value set corresponding to a maximum quantity of transmission layers being 2, 3, or 4.

Optionally, an index value set corresponding to a maximum quantity of transmission layers being 2 is different from an index value set corresponding to a maximum quantity of transmission layers being 3 or 4.

Optionally, a value that corresponds to the index value indicated by the transmission parameter indication information and that is of the quantity of transmission layers is less than the value of the maximum quantity of transmission layers.

Optionally, when any fourth index value p in a fourth index value set corresponding to a value x of the maximum quantity of transmission layers is the same as any fifth index value q in a fifth index value set corresponding to a value y of the maximum quantity of transmission layers, a value of a quantity of transmission layers and a precoding matrix indicator that correspond to the fourth index value p are the same as a value of a quantity of transmission layers and a precoding matrix indicator that correspond to the fifth index value q, and a precoding matrix associated with the precoding matrix indicator corresponding to the fourth index value p is the same as a precoding matrix associated with the precoding matrix indicator corresponding to the fifth index value q, where x and y are positive integers greater than X and less than or equal to K, p is any natural number greater than or equal to 0 and less than P, q is any natural number greater than or equal to 0 and less than Q, P is a quantity of index values included in the fourth index value set, Q is a quantity of index values included in the fifth index value set, and the fourth index value p and the fifth index value q are non-reserved index values.

With reference to the second aspect, the method further includes:
generating coherent capability indication information, where the coherent capability indication information is used to indicate the current coherent capability.

With reference to a possible implementation of the second aspect, a correspondence among the index value, the value of the quantity of transmission layers, and the precoding matrix indicator satisfies:

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |
| … | … | … | … |
| 3 | 1 layer: TPMI=3 | 3 | 1 layer: TPMI=3 |
| 4 | 1 layer: TPMI=13 | 4 | 1 layer: TPMI=13 |
| 5 | 1 layer: TPMI=4 | | |
| … | … | | |
| 13 | 1 layer: TPMI=12 | | |
| 14 | 1 layer: TPMI=14 | | |
| 15 | 1 layer: TPMI=15 | | |

With reference to a possible implementation of the second aspect, a correspondence among the index value, the value of the quantity of transmission layers, and the precoding matrix indicator may alternatively satisfy:

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |
| … | … | … | … |
| 3 | 1 layer: TPMI=3 | 3 | 1 layer: TPMI=3 |
| 4 | 2 layers: TPMI=0 | 4 | 2 layers: TPMI=0 |
| … | … | … | … |
| 9 | 2 layers: TPMI=5 | 9 | 2 layers: TPMI=5 |
| 10 | 3 layers: TPMI=0 | 10 | 3 layers: TPMI=0 |
| 11 | 4 layers: TPMI=0 | 11 | 4 layers: TPMI=0 |
| 12 | 1 layer: TPMI=13 | 12 | 1 layer: TPMI=13 |
| 13 | 2 layers: TPMI=6 | 13 | 2 layers: TPMI=6 |
| 14 | 3 layers: TPMI=1 | 14 | 3 layers: TPMI=1 |
| 15 | 1 layer: TPMI=4 | | |

| Field index value | Second codebook subset configuration | Field index value | First codebook subset configuration |
|---|---|---|---|
| … | … | | |
| 23 | 1 layer: TPMI=12 | | |
| 24 | 1 layer: TPMI=14 | | |
| 25 | 1 layer: TPMI=15 | | |
| 26 | 2 layers: TPMI=7 | | |
| … | … | | |
| 32 | 2 layers: TPMI=13 | | |
| 33 | 3 layers: TPMI=2 | | |
| 34 | 4 layers: TPMI=1 | | |
| 35 | 4 layers: TPMI=2 | | |

or

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |
| … | … | … | … |
| 3 | 1 layer: TPMI=3 | 3 | 1 layer: TPMI=3 |
| 4 | 1 layer: TPMI=13 | 4 | 1 layer: TPMI=13 |
| 5 | 2 layers: TPMI=0 | 5 | 2 layers: TPMI=0 |
| … | … | … | … |
| 11 | 2 layers: TPMI=6 | 11 | 2 layers: TPMI=6 |
| 12 | 3 layers: TPMI=0 | 12 | 3 layers: TPMI=0 |
| 13 | 3 layers: TPMI=1 | 13 | 3 layers: TPMI=1 |
| 14 | 4 layers: TPMI=0 | 14 | 4 layers: TPMI=0 |
| 15 | 1 layer: TPMI=4 | | |
| … | … | | |
| 23 | 1 layer: TPMI=12 | | |

| Field index value | Second codebook subset configuration | Field index value | First codebook subset configuration |
|---|---|---|---|
| 24 | 1 layer: TPMI=14 | | |
| 25 | 1 layer: TPMI=15 | | |
| 26 | 2 layers: TPMI=7 | | |
| … | … | | |
| 32 | 2 layers: TPMI=13 | | |
| 33 | 3 layers: TPMI=2 | | |
| 34 | 4 layers: TPMI=1 | | |
| 35 | 4 layers: TPMI=2 | | |

With reference to a possible implementation of the second aspect, a correspondence among the index value, the value of the quantity of transmission layers, and the precoding matrix indicator may alternatively satisfy:

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |
| … | … | … | … |
| 3 | 1 layer: TPMI=3 | 3 | 1 layer: TPMI=3 |
| 4 | 1 layer: TPMI=13 | 4 | 1 layer: TPMI=13 |
| 5 | 2 layers: TPMI=0 | 5 | 2 layers: TPMI=0 |
| … | … | … | … |
| 11 | 2 layers: TPMI=6 | 11 | 2 layers: TPMI=6 |
| 12 | 1 layer: TPMI=4 | | |
| … | … | | |
| 20 | 1 layer: TPMI=12 | | |
| 21 | 1 layer: TPMI=14 | | |
| 22 | 1 layer: TPMI=15 | | |
| 23 | 2 layers: TPMI=7 | | |
| … | … | | |

| Field index value | Second codebook subset configuration | Field index value | First codebook subset configuration |
|---|---|---|---|
| 29 | 2 layers: TPMI=13 | | |

or

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |
| … | … | … | … |
| 3 | 1 layer: TPMI=3 | 3 | 1 layer: TPMI=3 |
| 4 | 2 layers: TPMI=0 | 4 | 2 layers: TPMI=0 |
| … | … | … | … |
| 9 | 2 layers: TPMI=5 | 9 | 2 layers: TPMI=5 |
| 10 | 1 layer: TPMI=13 | 10 | 1 layer: TPMI=13 |
| 11 | 2 layers: TPMI=6 | 11 | 2 layers: TPMI=6 |
| 12 | 1 layer: TPMI=4 | | |
| … | … | | |
| 20 | 1 layer: TPMI=12 | | |
| 21 | 1 layer: TPMI=14 | | |
| 22 | 1 layer: TPMI=15 | | |
| 23 | 2 layers: TPMI=7 | | |
| … | … | | |
| 29 | 2 layers: TPMI=13 | | |

According to a third aspect, an access device is provided. The device includes:

a processing module, configured to generate transmission parameter indication information, where the transmission parameter indication information is used to indicate an index value selected from an index value set corresponding to a current coherent capability, and the index value is used to indicate a quantity of transmission layers and a precoding matrix; and
a transceiver module, configured to send the transmission parameter indication information.

With reference to the third aspect, the index value includes an index of the index value, a value of the quantity of transmission layers, and an index of the precoding matrix, and the precoding matrix is uniquely determined based on both the value of the quantity of transmission layers and the index of the precoding matrix.
With reference to the third aspect, the current coherent capability is one of the following capabilities:

a semi-coherent capability; and
a non-coherent capability.

With reference to the third aspect, a codebook subset configuration includes a first codebook subset and a second codebook subset.

With reference to the third aspect, the first codebook subset includes a non-coherent codeword and a part of a partially-coherent codeword or a fully-coherent codeword. The non-coherent codeword means that there is only one non-zero element for each layer of a precoding matrix. The partially-coherent codeword means that there are some non-zero elements for each layer of a precoding matrix. The fully-coherent codeword means that there are all non-zero elements for each layer of a precoding matrix. A manner of including only a part of a partially-coherent codeword or a fully-coherent codeword is that the first codebook subset includes a partially-coherent codeword or a fully-coherent codeword in ranks 1 to 3. The second codebook subset includes a non-coherent codeword, a partially-coherent codeword, and a part of a fully-coherent codeword. A manner of including only a part of a fully-coherent codeword is that the second codebook subset includes a part of a fully-coherent codeword in a rank 1.

With reference to the third aspect, the first codebook subset corresponds to a terminal device having a non-coherent capability, and the second codebook subset corresponds to a terminal device having a partially-coherent capability. Specifically, the terminal device having the non-coherent capability may configure the first codebook subset, and the terminal device having the partially-coherent capability may configure the second codebook subset.

With reference to the third aspect, that the first codebook subset corresponds to a terminal device having a partially-coherent capability specifically means that the terminal device having the partially-coherent capability may further configure the first codebook subset.

With reference to the third aspect, an index value set corresponding to each codebook subset configuration includes at least one index value, and an index value set corresponding to the first codebook subset is a subset of an index value set corresponding to the second codebook subset. Specifically, an index value set corresponding to a first codebook subset configuration includes M first index values, and an index value set corresponding to a second codebook subset configuration includes N second index values, where the M first index values include M natural numbers from 0 to M-1, the N second index values include N natural numbers from 0 to N-1, M is a positive integer greater than or equal to 1, and N is a positive integer greater than M.

Optionally, when any first index value m in the M first index values is the same as any second index value n in the N second index values, a value of a quantity of transmission layers and a precoding matrix indicator that correspond to the first index value m are the same as a value of a quantity of transmission layers and a precoding matrix indicator that correspond to the second index value n, and a precoding matrix associated with the precoding matrix indicator corresponding to the first index value m is the same as a precoding matrix associated with the precoding matrix indicator corresponding to the second index value n, where the first index value m and the second index value n are non-reserved index values, and the non-reserved index value corresponds to a value of a quantity of transmission layers and a precoding matrix indicator; and m is any natural number greater than or equal to 0 and less than M, and n is any natural number greater than or equal to 0 and less than N.

Optionally, combinations of a quantity of layers and a TPMI that are included in the index value set corresponding to the first codebook subset are all included in combinations of a quantity of layers and a TPMI that are included in the index value set corresponding to the second codebook subset.

Optionally, the precoding matrix is determined based on the value of the quantity of transmission layers, a specific waveform, and the precoding matrix indicator.

Optionally, the specific waveform includes a CP-OFDM waveform and a DFT-s-OFDM waveform.

With reference to the third aspect, the method further includes: receiving limitation information for a maximum quantity of transmission layers of a physical uplink shared channel PUSCH, where the limitation information for the maximum quantity of transmission layers is used to indicate a maximum quantity of transmission layers at which a second network device sends the PUSCH.

Optionally, a value of the maximum quantity of transmission layers is one of 1, 2, 3, or 4.

Optionally, for a same codebook subset configuration, index value sets corresponding to all values that are of the maximum quantity of transmission layers and that are greater than 2 are the same; index value sets corresponding to a value 1 of the maximum quantity of transmission layers are different from index value sets corresponding to all values that are of the maximum quantity of transmission layers and that are greater than 1; and index value sets corresponding to a value 2 of the maximum quantity of transmission layers are different from the index value sets corresponding to all the values that are of the maximum quantity of transmission layers and that are greater than 2.

Optionally, an index value set corresponding to a maximum quantity of transmission layers being 3 is the same as an index value set corresponding to a maximum quantity of transmission layers being 4.

Optionally, an index value set corresponding to a maximum quantity of transmission layers being 2, an index value set corresponding to a maximum quantity of transmission layers being 3, and an index value set corresponding to a maximum quantity of transmission layers being 4 are the same.

Optionally, an index value set corresponding to a maximum quantity of transmission layers being 1 is different from an index value set corresponding to a maximum quantity of transmission layers being 2, 3, or 4.

Optionally, an index value set corresponding to a maximum quantity of transmission layers being 2 is different from an index value set corresponding to a maximum quantity of transmission layers being 3 or 4.

Optionally, a value that corresponds to the index value indicated by the transmission parameter indication information and that is of the quantity of transmission layers is less than the value of the maximum quantity of transmission layers.

Optionally, when any fourth index value p in a fourth index value set corresponding to a value x of the maximum quantity of transmission layers is the same as any fifth index value q in a fifth index value set corresponding to a value y of the maximum quantity of transmission layers, a value of a quantity of transmission layers and a precoding matrix indicator that correspond to the fourth index value p are the same as a value of a quantity of transmission layers and a precoding matrix indicator that correspond to the fifth index value q, and a precoding matrix associated with the precoding matrix indicator corresponding to the fourth index value p is the same as a precoding matrix associated with the precoding matrix indicator corresponding to the fifth index value q, where x and y are positive integers greater than X and less than or equal to K, p is any natural number greater than or equal to 0 and less than P, q is any natural number greater than or equal to 0 and less than Q, P is a quantity of index values included in the fourth index value set, Q is a quantity of index values included in the fifth index value set, and the fourth index value p and the fifth index value q are non-reserved index values.

With reference to the third aspect, the method further includes:
generating coherent capability indication information, where the coherent capability indication information is used to indicate the current coherent capability.

With reference to a possible implementation of the third aspect, a correspondence among the index value, the value of the quantity of transmission layers, and the precoding matrix indicator satisfies:

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |
| … | … | … | … |
| 3 | 1 layer: TPMI=3 | 3 | 1 layer: TPMI=3 |

| 4 | 1 layer: TPMI=13 | 4 | 1 layer: TPMI=13 |
|---|---|---|---|
| 5 | 1 layer: TPMI=4 | | |
| … | … | | |
| 13 | 1 layer: TPMI=12 | | |
| 14 | 1 layer: TPMI=14 | | |
| 15 | 1 layer: TPMI=15 | | |

With reference to a possible implementation of the third aspect, a correspondence among the index value, the value of the quantity of transmission layers, and the precoding matrix indicator may alternatively satisfy:

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |
| … | … | … | … |
| 3 | 1 layer: TPMI=3 | 3 | 1 layer: TPMI=3 |
| 4 | 2 layers: TPMI=0 | 4 | 2 layers: TPMI=0 |
| … | … | … | … |
| 9 | 2 layers: TPMI=5 | 9 | 2 layers: TPMI=5 |
| 10 | 3 layers: TPMI=0 | 10 | 3 layers: TPMI=0 |
| 11 | 4 layers: TPMI=0 | 11 | 4 layers: TPMI=0 |
| 12 | 1 layer: TPMI=13 | 12 | 1 layer: TPMI=13 |
| 13 | 2 layers: TPMI=6 | 13 | 2 layers: TPMI=6 |
| 14 | 3 layers: TPMI=1 | 14 | 3 layers: TPMI=1 |
| 15 | 1 layer: TPMI=4 | | |
| … | … | | |
| 23 | 1 layer: TPMI=12 | | |
| 24 | 1 layer: TPMI=14 | | |
| 25 | 1 layer: TPMI=15 | | |
| 26 | 2 layers: TPMI=7 | | |
| … | … | | |

| Field index value | Second codebook subset configuration | Field index value | First codebook subset configuration |
|---|---|---|---|
| 32 | 2 layers: TPMI=13 | | |
| 33 | 3 layers: TPMI=2 | | |
| 34 | 4 layers: TPMI=1 | | |
| 35 | 4 layers: TPMI=2 | | |

or

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |
| … | … | … | … |
| 3 | 1 layer: TPMI=3 | 3 | 1 layer: TPMI=3 |
| 4 | 1 layer: TPMI=13 | 4 | 1 layer: TPMI=13 |
| 5 | 2 layers: TPMI=0 | 5 | 2 layers: TPMI=0 |
| … | … | … | … |
| 11 | 2 layers: TPMI=6 | 11 | 2 layers: TPMI=6 |
| 12 | 3 layers: TPMI=0 | 12 | 3 layers: TPMI=0 |
| 13 | 3 layers: TPMI=1 | 13 | 3 layers: TPMI=1 |
| 14 | 4 layers: TPMI=0 | 14 | 4 layers: TPMI=0 |
| 15 | 1 layer: TPMI=4 | | |
| … | … | | |
| 23 | 1 layer: TPMI=12 | | |
| 24 | 1 layer: TPMI=14 | | |
| 25 | 1 layer: TPMI=15 | | |
| 26 | 2 layers: TPMI=7 | | |
| … | … | | |
| 32 | 2 layers: TPMI=13 | | |
| 33 | 3 layers: TPMI=2 | | |
| 34 | 4 layers: TPMI=1 | | |
| 35 | 4 layers: TPMI=2 | | |

With reference to a possible implementation of the third aspect, a correspondence among the index value, the value of the quantity of transmission layers, and the precoding matrix indicator may alternatively satisfy:

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |
| … | … | … | … |
| 3 | 1 layer: TPMI=3 | 3 | 1 layer: TPMI=3 |
| 4 | 1 layer: TPMI=13 | 4 | 1 layer: TPMI=13 |
| 5 | 2 layers: TPMI=0 | 5 | 2 layers: TPMI=0 |
| … | … | … | … |
| 11 | 2 layers: TPMI=6 | 11 | 2 layers: TPMI=6 |
| 12 | 1 layer: TPMI=4 | | |
| … | … | | |
| 20 | 1 layer: TPMI=12 | | |
| 21 | 1 layer: TPMI=14 | | |
| 22 | 1 layer: TPMI=15 | | |
| 23 | 2 layers: TPMI=7 | | |
| … | … | | |
| 29 | 2 layers: TPMI=13 | | |

or

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |
| … | … | … | … |
| 3 | 1 layer: TPMI=3 | 3 | 1 layer: TPMI=3 |
| 4 | 2 layers: TPMI=0 | 4 | 2 layers: TPMI=0 |
| … | … | … | … |
| 9 | 2 layers: TPMI=5 | 9 | 2 layers: TPMI=5 |
| 10 | 1 layer: TPMI=13 | 10 | 1 layer: TPMI=13 |

| Field index value | Second codebook subset configuration | Field index value | First codebook subset configuration |
|---|---|---|---|
| 11 | 2 layers: TPMI=6 | 11 | 2 layers: TPMI=6 |
| 12 | 1 layer: TPMI=4 | | |
| … | … | | |
| 20 | 1 layer: TPMI=12 | | |
| 21 | 1 layer: TPMI=14 | | |
| 22 | 1 layer: TPMI=15 | | |
| 23 | 2 layers: TPMI=7 | | |
| … | … | | |
| 29 | 2 layers: TPMI=13 | | |

According to a fourth aspect, user equipment is provided. The user equipment includes:

a transceiver module, configured to receive transmission parameter indication information, where the transmission parameter indication information is used to indicate an index value selected from an index value set corresponding to a current coherent capability, and the index value is used to indicate a quantity of transmission layers and a precoding matrix; and
a processing module, configured to determine the quantity of transmission layers and the precoding matrix based on the transmission parameter indication information.

With reference to the fourth aspect, in a first possible implementation of the fourth aspect, the index value includes an index of the index value, a value of the quantity of transmission layers, and an index of the precoding matrix, and the precoding matrix is uniquely determined based on both the value of the quantity of transmission layers and the index of the precoding matrix.

With reference to the fourth aspect, in a second possible implementation of the fourth aspect, the current coherent capability is one of the following capabilities:

a semi-coherent capability; and
a non-coherent capability.

With reference to the fourth aspect, a codebook subset configuration includes a first codebook subset and a second codebook subset.

With reference to the fourth aspect, the first codebook subset includes a non-coherent codeword and a part of a partially-coherent codeword or a fully-coherent codeword. The non-coherent codeword means that there is only one non-zero element for each layer of a precoding matrix. The partially-coherent codeword means that there are some non-zero elements for each layer of a precoding matrix. The fully-coherent codeword means that there are all non-zero elements for each layer of a precoding matrix. A manner of including only a part of a partially-coherent codeword or a fully-coherent codeword is that the first codebook subset includes a partially-coherent codeword or a fully-coherent codeword in ranks 1 to 3. The second codebook subset includes a non-coherent codeword, a partially-coherent codeword, and a part of a fully-coherent codeword. A manner of including only a part of a fully-coherent codeword is that the second codebook subset includes a part of a fully-coherent codeword in a rank 1.

With reference to the fourth aspect, the first codebook subset corresponds to a terminal device having a non-coherent capability, and the second codebook subset corresponds to a terminal device having a partially-coherent capability. Specifically, the terminal device having the non-coherent capability may configure the first codebook subset, and the terminal device having the partially-coherent capability may configure the second codebook subset.

With reference to the fourth aspect, that the first codebook subset corresponds to a terminal device having a partially-coherent capability specifically means that the terminal device having the partially-coherent capability may further configure the first codebook subset.

With reference to the fourth aspect, an index value set corresponding to each codebook subset configuration includes at least one index value, and an index value set corresponding to the first codebook subset is a subset of an index value set corresponding to the second codebook subset. Specifically, an index value set corresponding to a first codebook subset configuration includes M first index values, and an index value set corresponding to a second codebook subset configuration includes N second index values, where the M first index values include M natural numbers from 0 to M-1, the N second index values include N natural numbers from 0 to N-1, M is a positive integer greater than or equal to 1, and N is a positive integer greater than M.

Optionally, when any first index value m in the M first index values is the same as any second index value n in the N second index values, a value of a quantity of transmission layers and a precoding matrix indicator that correspond to the first index value m are the same as a value of a quantity of transmission layers and a precoding matrix indicator that correspond to the second index value n, and a precoding matrix associated with the precoding matrix indicator corresponding to the first index value m is the same as a precoding matrix associated with the precoding matrix indicator corresponding to the second index value n, where the first index value m and the second index value n are non-reserved index values, and the non-reserved index value corresponds to a value of a quantity of transmission layers and a precoding matrix indicator; and m is any natural number greater than or equal to 0 and less than M, and n is any natural number greater than or equal to 0 and less than N.

Optionally, combinations of a quantity of layers and a TPMI that are included in the index value set corresponding to the first codebook subset are all included in combinations of a quantity of layers and a TPMI that are included in the index value set corresponding to the second codebook subset.

Optionally, the precoding matrix is determined based on the value of the quantity of transmission layers, a specific waveform, and the precoding matrix indicator.

Optionally, the specific waveform includes a CP-OFDM waveform and a DFT-s-OFDM waveform.

With reference to the fourth aspect, the method further includes: receiving limitation information for a maximum quantity of transmission layers of a physical uplink shared channel PUSCH, where the limitation information for the maximum quantity of transmission layers is used to indicate a maximum quantity of transmission layers at which a second network device sends the PUSCH.

Optionally, a value of the maximum quantity of transmission layers is one of 1, 2, 3, or 4.

Optionally, for a same codebook subset configuration, index value sets corresponding to all values that are of the maximum quantity of transmission layers and that are greater than 2 are the same; index value sets corresponding to a value 1 of the maximum quantity of transmission layers are different from index value sets corresponding to all values that are of the maximum quantity of transmission layers and that are greater than 1; and index value sets corresponding to a value 2 of the maximum quantity of transmission layers are different from the index value sets corresponding to all the values that are of the maximum quantity of transmission layers and that are greater than 2.

Optionally, an index value set corresponding to a maximum quantity of transmission layers being 3 is the same as an index value set corresponding to a maximum quantity of transmission layers being 4.

Optionally, an index value set corresponding to a maximum quantity of transmission layers being 2, an index value set corresponding to a maximum quantity of transmission layers being 3, and an index value set corresponding to a maximum quantity of transmission layers are the same being 4.

Optionally, an index value set corresponding to a maximum quantity of transmission layers being 1 is different from an index value set corresponding to a maximum quantity of transmission layers being 2, 3, or 4.

Optionally, an index value set corresponding to a maximum quantity of transmission layers being 2 is different from an index value set corresponding to a maximum quantity of transmission layers being 3 or 4.

Optionally, a value that corresponds to the index value indicated by the transmission parameter indication information and that is of the quantity of transmission layers is less than the value of the maximum quantity of transmission layers.

Optionally, when any fourth index value p in a fourth index value set corresponding to a value x of the maximum quantity of transmission layers is the same as any fifth index value q in a fifth index value set corresponding to a value y of the maximum quantity of transmission layers, a value of a quantity of transmission layers and a precoding matrix indicator that correspond to the fourth index value p are the same as a value of a quantity of transmission layers and a precoding matrix indicator that correspond to the fifth index value q, and a precoding matrix associated with the precoding matrix indicator corresponding to the fourth index value p is the same as a precoding matrix associated with the precoding matrix indicator corresponding to the fifth index value q, where x and y are positive integers greater than X and less than or equal to K, p is any natural number greater than or equal to 0 and less than P, q is any natural number greater than or equal to 0 and less than Q, P is a quantity of index values included in the fourth index value set, Q is a quantity of index values included in the fifth index value set, and the fourth index value p and the fifth index value q are non-reserved index values.

With reference to the fourth aspect, in a third possible implementation of the fourth aspect, the method further includes:

generating coherent capability indication information, where the coherent capability indication information is used to indicate the current coherent capability.

With reference to a possible implementation of the fourth aspect, a correspondence among the index value, the value of the quantity of transmission layers, and the precoding matrix indicator satisfies:

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |
| … | … | … | … |
| 3 | 1 layer: TPMI=3 | 3 | 1 layer: TPMI=3 |
| 4 | 1 layer: TPMI=13 | 4 | 1 layer: TPMI=13 |
| 5 | 1 layer: TPMI=4 | | |
| … | … | | |
| 13 | 1 layer: TPMI=12 | | |
| 14 | 1 layer: TPMI=14 | | |
| 15 | 1 layer: TPMI=15 | | |

With reference to a possible implementation of the fourth aspect, a correspondence among the index value, the value of the quantity of transmission layers, and the precoding matrix indicator may alternatively satisfy:

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |
| … | … | … | … |
| 3 | 1 layer: TPMI=3 | 3 | 1 layer: TPMI=3 |
| 4 | 2 layers: TPMI=0 | 4 | 2 layers: TPMI=0 |
| … | … | … | … |
| 9 | 2 layers: TPMI=5 | 9 | 2 layers: TPMI=5 |
| 10 | 3 layers: TPMI=0 | 10 | 3 layers: TPMI=0 |
| 11 | 4 layers: TPMI=0 | 11 | 4 layers: TPMI=0 |
| 12 | 1 layer: TPMI=13 | 12 | 1 layer: TPMI=13 |
| 13 | 2 layers: TPMI=6 | 13 | 2 layers: TPMI=6 |
| 14 | 3 layers: TPMI=1 | 14 | 3 layers: TPMI=1 |
| 15 | 1 layer: TPMI=4 | | |
| … | … | | |
| 23 | 1 layer: TPMI=12 | | |
| 24 | 1 layer: TPMI=14 | | |
| 25 | 1 layer: TPMI=15 | | |
| 26 | 2 layers: TPMI=7 | | |
| … | … | | |
| 32 | 2 layers: TPMI=13 | | |
| 33 | 3 layers: TPMI=2 | | |
| 34 | 4 layers: TPMI=1 | | |
| 35 | 4 layers: TPMI=2 | | |

or

| Field index value | Second codebook subset configuration | Field index value | First codebook subset configuration |
|---|---|---|---|
| 0 | 1 layer: TPMI=0 | 0 | 1 layer: TPMI=0 |

| Field index value | Second codebook subset configuration | Field index value | First codebook subset configuration |
|---|---|---|---|
| 1 | 1 layer: TPMI=1 | 1 | 1 layer: TPMI=1 |
| … | … | … | … |
| 3 | 1 layer: TPMI=3 | 3 | 1 layer: TPMI=3 |
| 4 | 1 layer: TPMI=13 | 4 | 1 layer: TPMI=13 |
| 5 | 2 layers: TPMI=0 | 5 | 2 layers: TPMI=0 |
| … | … | … | … |
| 11 | 2 layers: TPMI=6 | 11 | 2 layers: TPMI=6 |
| 12 | 3 layers: TPMI=0 | 12 | 3 layers: TPMI=0 |
| 13 | 3 layers: TPMI=1 | 13 | 3 layers: TPMI=1 |
| 14 | 4 layers: TPMI=0 | 14 | 4 layers: TPMI=0 |
| 15 | 1 layer: TPMI=4 | | |
| … | … | | |
| 23 | 1 layer: TPMI=12 | | |
| 24 | 1 layer: TPMI=14 | | |
| 25 | 1 layer: TPMI=15 | | |
| 26 | 2 layers: TPMI=7 | | |
| … | … | | |
| 32 | 2 layers: TPMI=13 | | |
| 33 | 3 layers: TPMI=2 | | |
| 34 | 4 layers: TPMI=1 | | |
| 35 | 4 layers: TPMI=2 | | |

With reference to a possible implementation of the fourth aspect, a correspondence among the index value, the value of the quantity of transmission layers, and the precoding matrix indicator may alternatively satisfy:

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |

| Field index value | Second codebook subset configuration | Field index value | First codebook subset configuration |
|---|---|---|---|
| … | … | … | … |
| 3 | 1 layer: TPMI=3 | 3 | 1 layer: TPMI=3 |
| 4 | 1 layer: TPMI=13 | 4 | 1 layer: TPMI=13 |
| 5 | 2 layers: TPMI=0 | 5 | 2 layers: TPMI=0 |
| … | … | … | … |
| 11 | 2 layers: TPMI=6 | 11 | 2 layers: TPMI=6 |
| 12 | 1 layer: TPMI=4 | | |
| … | … | | |
| 20 | 1 layer: TPMI=12 | | |
| 21 | 1 layer: TPMI=14 | | |
| 22 | 1 layer: TPMI=15 | | |
| 23 | 2 layers: TPMI=7 | | |
| … | … | | |
| 29 | 2 layers: TPMI=13 | | |

or

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |
| … | … | … | … |
| 3 | 1 layer: TPMI=3 | 3 | 1 layer: TPMI=3 |
| 4 | 2 layers: TPMI=0 | 4 | 2 layers: TPMI=0 |
| … | … | … | … |
| 9 | 2 layers: TPMI=5 | 9 | 2 layers: TPMI=5 |
| 10 | 1 layer: TPMI=13 | 10 | 1 layer: TPMI=13 |
| 11 | 2 layers: TPMI=6 | 11 | 2 layers: TPMI=6 |
| 12 | 1 layer: TPMI=4 | | |

| Field index value | Second codebook subset configuration | Field index value | First codebook subset configuration |
|---|---|---|---|
| … | … | | |
| 20 | 1 layer: TPMI=12 | | |
| 21 | 1 layer: TPMI=14 | | |
| 22 | 1 layer: TPMI=15 | | |
| 23 | 2 layers: TPMI=7 | | |
| … | … | | |
| 29 | 2 layers: TPMI=13 | | |

## BRIEF DESCRIPTION OF DRAWINGS

FIG. 1 is an example schematic diagram of a wireless communication network according to an embodiment of the present invention;

FIG. 2 is an example flowchart of a channel measurement method according to an embodiment of the present invention;

FIG. 3 is an example flowchart of a channel measurement method according to an embodiment of the present invention;

FIG. 4 is an example schematic diagram of a logical structure of a communication device according to an embodiment of the present invention; and

FIG. 5 is an example schematic diagram of a hardware structure of a communication device according to an embodiment of the present invention.

## DESCRIPTION OF EMBODIMENTS

The currently researched next-generation wireless communication system may also be referred to as a new radio (New Radio, NR) system or a 5G system. A latest research progress shows that a next generation wireless communication standard supports semi-persistent channel measurement, and CSI obtained through semi-persistent channel measurement may be transmitted over a physical uplink shared channel (Physical Uplink Shared Channel, PUSCH). How to indicate user equipment to start and stop semi-persistent channel measurement needs to be first resolved for support of semi-persistent channel measurement. Using technical solutions provided in embodiments of the present invention helps resolve the foregoing problem. The technical solutions provided in embodiments of the present invention are described below with reference to the accompanying drawings and specific embodiments.

Embodiments of the present invention provide a communication device. The communication device may be used as the access device or the user equipment. The communication device includes a processor and a transceiver. The processor is configured to execute operations of the processing module, and the transceiver is configured to execute operations of the transceiver module.

In a specific implementation process, the processor may be configured to perform baseband-related processing and the like, and the transceiver may be configured to perform radio frequency receiving and sending and the like. The foregoing components may be separately deployed on chips independent of each other, or at least a part or all of the components may be deployed on a same chip. For example, the processor may further be divided into an analog baseband processor and a digital baseband processor. The analog baseband processor and the transceiver may be integrated on a same chip, and the digital baseband processor may be deployed on an independent chip. With continuous development of integrated circuit technologies, more components can be integrated on a same chip. For example, the digital baseband processor and a plurality of application processors (including but not limited to a graphics processing unit and a multimedia processor) may be integrated on a same chip. Such a chip may be referred to as a system on chip (System on Chip). Whether components are separately deployed on different chips or integrated on one or more chips usually depends on specific requirements of a product design. Specific implementation forms of the foregoing components are not limited in embodiments of the present invention.

Embodiments of the present invention further provide a processor, configured to perform methods. In a process of performing these methods, a process of sending information and a process of receiving information in the foregoing methods may be understood as a process of outputting the information by the processor and a process of receiving the input information by the processor. Specifically, when outputting the information, the processor outputs the information to the transceiver for transmission. Still further, the information output by the processor may undergo other processing before arriving at the transceiver. Similarly, when the processor receives the input information, the transceiver receives the information and inputs the information into the processor. Still further, the information received by the transceiver may undergo other processing before being input into the processor.

According to the foregoing principle, for example, the receiving transmission parameter indication information mentioned in the foregoing method may be understood as receiving the input transmission parameter indication information by the processor. For another example, sending transmission parameter indication information may be understood as outputting transmission parameter indication information by the processor.

In this case, unless otherwise specified, for operations such as transmission, sending, and receiving related to the processor, if the operations do not contradict actual functions or internal logic of the operations in related description, the operations may be more generally understood as operations such as receiving input information and outputting information by the processor, instead of transmission, sending, and receiving operations directly performed by a radio frequency circuit and an antenna.

In a specific implementation process, the processor may be a processor dedicated to performing these methods, or a processor, for example, a general-purpose processor, that executes computer instructions in a memory to perform these methods. The memory may be a non-transitory (non-transitory) memory, for example, a read-only memory (Read-Only Memory, ROM). The memory and the processor may be integrated on a same chip, or may be separately deployed on different chips. A type of the memory and a manner of deploying the memory and the processor are not limited in embodiments of the present invention.

According to a twentieth aspect of embodiments of the present invention, a computer-readable storage medium is provided, including instructions. When the instructions are run on a computer, the computer performs the foregoing various methods. Still further, the computer-readable storage medium is a non-transitory computer-readable storage medium.

According to a twenty-first aspect of embodiments of the present invention, a computer program product including instructions is provided. When the computer program product runs on a computer, the computer performs the foregoing various methods.

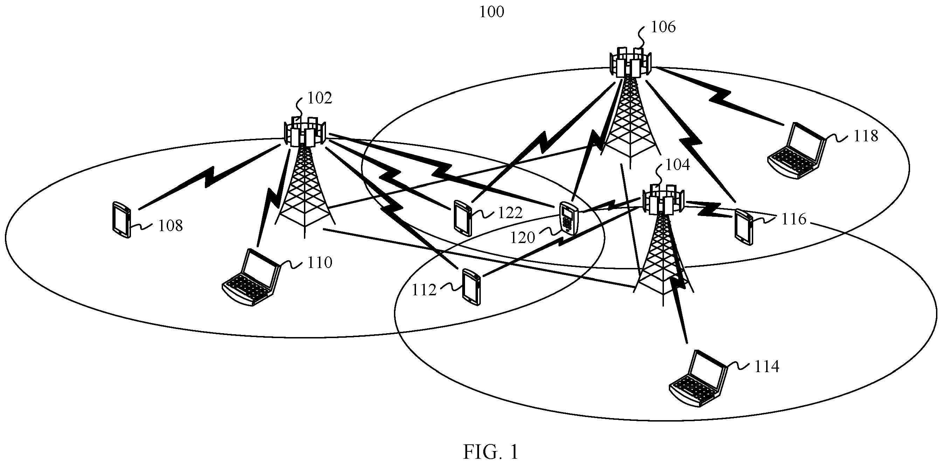

FIG. 1 is an example schematic diagram of a wireless communication network 100 according to an embodiment of the present invention. As shown in FIG. 1, the wireless communication network 100 includes base stations 102, 104, and 106 and terminal devices 108, 110, 112, 114, 116, 118, 120, and 122. The base stations 102, 104, and 106 may communicate with each other through backhaul (backhaul) links (denoted by straight lines among the base stations 102, 104, and 106). The backhaul link may be a wired backhaul link (for example, optical fibers or copper cables) or a wireless backhaul link (for example, microwaves). The terminal devices 108, 110, 112, 114, 116, 118, 120, and 122 may communicate with the corresponding base stations 102, 104, and 106 through radio links (for example, denoted by fold lines between the base stations 102, 104, and 106 and the terminal devices 108, 110, 112, 114, 116, 118, 120, and 122).

The base stations 102, 104, and 106 serving as access devices provide radio access services for the terminal devices 108, 110, 112, 114, 116, 118, 120, and 122 serving as user equipment. Specifically, each base station corresponds to a service coverage area (which may also be referred to as a cellular area, denoted by an elliptical area in FIG. 1), and a terminal device entering the area may communicate with the base station using radio signals, to receive wireless access services provided by the base station. There may be an overlapping area between service coverage areas of the base stations. A terminal device in the overlapping area may receive radio signals from a plurality of base stations. Therefore, these base stations may coordinate with each other, to serve the terminal device. For example, the plurality of base stations may serve the terminal device in the overlapping area using a coordinated multipoint (Coordinated multipoint, CoMP) technology. For example, as shown in FIG. 1, there is an overlapping area between a service coverage area of the base station 102 and a service coverage area of the base station 104, and the terminal device 112 is located in the overlapping area. Therefore, the terminal device 112 may receive radio signals from the base station 102 and the base station 104. The base station 102 and the base station 104 may coordinate with each other, to serve the terminal device 112. For another example, as shown in FIG. 1, there is an overlapping area between service coverage areas of the base stations 102, 104, and 106, and the terminal device 120 is located in the overlapping area. Therefore, the terminal device 120 may receive radio signals from the base stations 102, 104, and 106. The base stations 102, 104, and 106 may coordinate with each other, to serve the terminal device 120.

A base station may also be referred to as a NodeB (NodeB), an evolved NodeB (evolved NodeB, eNodeB), an access point (Access Point, AP), or the like in different wireless communication technologies. In addition, based on sizes of provided service coverage areas, base stations may be classified into a macro base station for providing a macro cell (Macro cell), a micro base station for providing a pico cell (Pico cell), a femto base station for providing a femto cell (Femto cell), and the like. Another name may be used for a future base station as wireless communication technologies evolve.

The terminal devices 108, 110, 112, 114, 116, 118, 120, and 122 may be various wireless communication devices having a wireless communication function such as mobile cellular phones, cordless phones, personal digital assistants (Personal Digital Assistants, PDAs), smartphones, notebook computers, tablet computers, wireless data cards, wireless modems (Modulator and Demodulator, Modem), or wearable devices such as smartwatches. With emergence of Internet of Things (Internet of Things, IoT) technologies and vehicle-to-everything (Vehicle-to-everything, V2X) technologies, more devices that did not have a communication function such as household appliances, transportation vehicles, tool devices, service devices, and service facilities are provided with a wireless communication function by configuring wireless communication units, so that they can access a wireless communication network and receive remote control. These types of devices provided with a wireless communication function by configuring wireless communication units also belong to wireless communication devices. In addition, the terminal devices 108, 110, 112, 114, 116, 118, 120, and 122 may also be referred to as mobile stations, mobile devices, mobile terminals, wireless terminals, handheld devices, clients, or the like.

The base stations 102, 104, and 106 and the terminal devices 108, 110, 112, 114, 116, 118, 120, and 122 each may be equipped with a plurality of antennas, to support a MIMO (multiple-input multiple-output, MIMO) technology. Further, the base stations 102, 104, and 106 and the terminal devices 108, 110, 112, 114, 116, 118, 120, and 122 may support both a single-user MIMO (Single-User MIMO, SU-MIMO) technology and a multi-user MIMO (Multi-User MIMO, MU-MIMO) technology. The MU-MIMO technology may be implemented based on a space division multiple access (Space Division Multiple Access, SDMA) technology. Because being equipped with a plurality of antennas, the base stations 102, 104, and 106 and the terminal devices 108, 110, 112, 114, 116, 118, 120, and 122 may further flexibly support a single-input single-output (Single-Input Single-Output, SISO) technology, a single-input multiple-output (Single-Input Multiple-Output, SIMO) technology, and a multiple-input single-output (Multiple-input Single-Output, MISO) technology, to implement various diversity (including but not limited to transmit diversity and receive diversity) and multiplexing technologies. The diversity technologies may include a transmit diversity (Transmit Diversity, TD) technology, a receive diversity (Receive Diversity, RD) technology, and the like. The multiplexing technology may be a spatial multiplexing (Spatial Multiplexing) technology. In addition, the foregoing technologies may further include a plurality of implementation solutions. For example, the transmit diversity technology may include diversity modes such as space-time transmit diversity (Space-Time Transmit Diversity, STTD), space-frequency transmit diversity (Space-Frequency Transmit Diversity, SFTD), time switched transmit diversity (Time Switched Transmit Diversity, TSTD), frequency switched transmit diversity (Frequency Switched Transmit Diversity, FSTD), orthogonal transmit diversity (Orthogonal Transmit Diversity, OTD), and cyclic delay diversity (Cyclic Delay Diversity, CDD), and diversity modes obtained by deriving, evolving, and combining the foregoing diversity modes. This is not limited. For example, transmit diversity modes such as space-time block coding (Space-Time Block Coding, STBC), space frequency block coding (Space Frequency Block Coding, SFBC), and CDD are used in the current LTE (Long Term Evolution, LTE) standard. General descriptions about transmit diversity modes are provided above with reference to examples. A person skilled in the art should understand that there may be other transmit diversity modes in addition to the foregoing described examples. Therefore, the foregoing descriptions should not be understood as limitations on the technical solutions of the present invention. It should be understood that the technical solutions of the present invention are applicable to various possible transmit diversity solutions.

In addition, the base stations 102, 104, and 106 and the terminal devices 108, 110, 112, 114, 116, 118, 120, and 122 may communicate with each other using various wireless communications technologies, for example, a time division multiple access (Time Division Multiple Access, TDMA) technology, a frequency division multiple access (Frequency Division Multiple Access, FDMA) technology, a code division multiple access (Code Division Multiple Access, CDMA) technology, a time division-synchronous code division multiple access (Time Division-Synchronous Code Division Multiple Access, TD-SCDMA) technology, an orthogonal frequency division multiple access (Orthogonal FDMA, OFDMA) technology, a single carrier frequency division multiple access (Single Carrier FDMA, SC-FDMA) technology, a space division multiple access (Space Division Multiple Access, SDMA) technology, and evolved and derived technologies of these technologies. This is not limited. The foregoing wireless communication technologies, as radio access technologies (Radio Access Technologies, RATs), are adopted by many wireless communication standards, to construct various well-known wireless communications systems (or networks), including but not limited to a global system for mobile communications (Global System for Mobile Communications, GSM), CDMA2000, wideband CDMA (Wideband CDMA, WCDMA), Wi-Fi defined in the 802.22 series standards, worldwide interoperability for microwave access (Worldwide Interoperability for Microwave Access, WiMAX), long term evolution (Long Term Evolution, LTE), LTE-advanced (LTE-Advanced, LTE-A), and evolved systems of these wireless communication systems. Unless otherwise specified, the technical solutions provided in embodiments of the present invention may be applied to the foregoing various wireless communication technologies and wireless communication systems. In addition, the terms "system" and "network" are interchangeable.

It should be noted that the wireless communication network 100 shown in FIG. 1 is merely an example, and does not constitute any limitation on the technical solutions of the present invention. A person skilled in the art should understand that, in a specific implementation process, the wireless communication network 100 may further include another device, and a quantity of base stations and a quantity of terminal devices may further be configured based on a specific requirement.

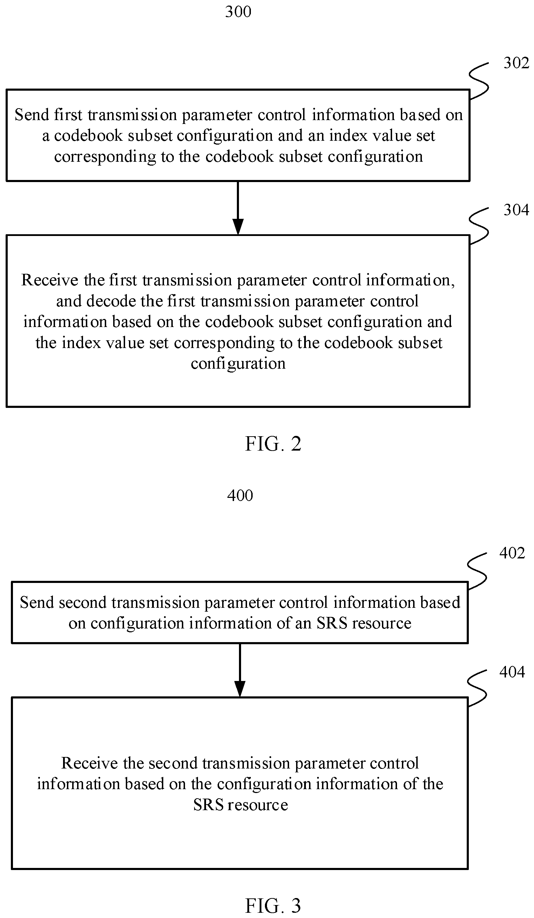

FIG. 2 is an example flowchart of a channel measurement method 300 according to an embodiment of the present invention. In a specific implementation process, step 302 in the method 300 may be performed by a network device, and step 304 may be performed by user equipment.

Step 302: Send transmission parameter indication information, where the transmission parameter indication information is used to indicate an index value selected from an index value set corresponding to a current codebook subset configuration, and the index value is used to indicate a quantity of transmission layers and a precoding matrix.

Optionally, the quantity of transmission layers and the precoding matrix are used to indicate a PUSCH transmission parameter.

Optionally, the transmission parameter indication information is carried in DCI or RRC signaling.

Optionally, before the transmission parameter indication information is sent, coherent capability indication information is received.

Optionally, before the transmission indication information is sent, codebook subset configuration information is sent. The codebook subset configuration information is used to indicate that a first codebook subset configuration is used or a second codebook subset configuration is used.

Optionally, the codebook subset configuration information is sent based on the coherent capability indication information. When the coherent capability indication information indicates a non-coherent capability, the codebook subset configuration information may be configured as the first codebook subset configuration. When the coherent capability indication information indicates a partially-coherent capability, the codebook subset configuration information may be configured as the second codebook subset configuration.

Optionally, the first codebook subset configuration includes a non-coherent codeword.

Optionally, the second codebook subset configuration includes a non-coherent codeword and a partially-coherent codeword.

Optionally, the first codebook subset configuration further includes a fully-coherent codeword and/or a part of a partially-coherent codeword.

Optionally, the second codebook subset configuration further includes a part of a fully-coherent codeword.

Step 304: Receive the transmission parameter indication information.

Optionally, before the transmission parameter indication information is received, the coherent capability indication information is sent.

Optionally, before the transmission parameter indication information is received, the codebook subset configuration information is received. The codebook subset configuration information is used to indicate at least one of the first codebook subset configuration and the second codebook subset configuration. Optionally, the transmission parameter indication information is received based on the codebook subset configuration information. Specifically, a quantity of bits of the transmission parameter indication information and a meaning corresponding to each status bit of the indication information are determined based on the codebook subset configuration information. The meaning corresponding to each status bit includes the quantity of transmission layers and a corresponding TPMI. A status in a field of jointly coded TRI and TPMI is used to indicate the TRI and the TPMI used for data transmission. Each TRI value corresponds to a group of precoding matrices, and a correspondence is shown in Table 1 to Table 4. When a quantity of transmission layers is indicated, a TPMI is used to indicate a precoding matrix selected from a group of precoding matrices corresponding to the quantity of transmission layers. Table 8 is an example of jointly coded TRI and TPMI. The indicated quantity of transmission layers, namely, the TRI, is indicated by using a layer x in the table, where a value range of x is {1, 2, 3, 4}. The indicated precoding matrix is indicated by using TPMI=y in the table, where y is a positive integer greater than or equal to 1, and a value range of y is determined based on a quantity of precoding matrices corresponding to three UE capabilities corresponding to each quantity of transmission layers in Table 1 to Table 4. In this embodiment, for each UE capability, indexes of the field of the jointly coded TRI and the TPMI are ordered in increasing order of layer quantities. As shown in Table 8, for a fully-coherent transmission capability, indexes 0 to 27 of the field indicate layer 1 transmission, and each index corresponds to a precoding matrix index that corresponds to layer 1 transmission and that includes a fully-coherent codeword, a partially-coherent codeword, and a non-coherent codeword. Indexes 28 to 49 of the field indicate layer 2 transmission, and each index corresponds to one precoding matrix index that corresponds to the layer 2 transmission and that includes a fully-coherent codeword, a partially-coherent codeword, and a non-coherent codeword. Indexes 50 to 56 of the field indicate layer 3 transmission, and each index corresponds to one precoding matrix index that corresponds to the layer 3 transmission and that includes a fully-coherent codeword, a partially-coherent codeword, and a non-coherent codeword. Indexes 57 to 61 of the field indicate layer 4 transmission, and each index corresponds to one precoding matrix index that corresponds to the layer 4 transmission and that includes a fully-coherent codeword, a partially-coherent codeword, and a non-coherent codeword.

Specifically, in the case of 4T, that is, in the case in which a maximum quantity of antenna ports that can be supported by the terminal device is 4, for the first codebook subset configuration, when a maximum quantity of ranks is 1, the first codebook subset configuration includes TPMIs 0 to 3 in Table 1 and Table 2, or the first codebook subset configuration includes TPMIs 0 to 3 and TPMIs 13 in Table 1 and Table 2, or the first codebook subset configuration includes TPMIs 0 to 3, TPMIs 4, TPMIs 8, and TPMIs 13 in Table 1 and Table 2. When the maximum quantity of ranks is 2, the first codebook subset configuration may further include TPMIs 0 to 5 or TPMIs 0 to 6 in Table 3, in addition to the codewords in the case of the maximum quantity of ranks being 1. When the maximum quantity of ranks is 3, the first codebook subset configuration may further include TPMIs 0 and 1 in Table 4, in addition to the codewords in the case of the maximum quantity of ranks being 2. When the maximum quantity of ranks is 4, the first codebook subset configuration may include a TPMI 0 in Table 5, in addition to the codewords in the case of the maximum quantity of ranks being 3. It should be understood that when the maximum quantity of supported antenna ports is greater than 4, the foregoing embodiment is also applicable to the case of a four-port configuration.

For the second codebook subset configuration, when a maximum quantity of ranks is 1, the first codebook subset configuration includes TPMIs 0 to 11 in Table 1 and Table 2, or the first codebook subset configuration includes TPMIs 0 to 11 and TPMIs 12 to 15 in Table 1 and Table 2, or the first codebook subset configuration includes TPMIs 0 to 11 and TPMIs 12 to 19 in Table 1 and Table 2. When the maximum quantity of ranks is 2, the first codebook subset configuration may further include TPMIs 0 to 13 in Table 3, in addition to the codewords in the case of the maximum quantity of ranks being 1. When the maximum quantity of ranks is 3, the first codebook subset configuration may further include TPMIs 0 to 2 in Table 4, in addition to the codewords in the case of the maximum quantity of ranks being 2. When the maximum quantity of ranks is 4, the first codebook subset configuration may further include TPMIs 0 to 2 in Table 5, in addition to the codewords in the case of the maximum quantity of ranks being 3.

In the present invention, a transmission rank indication (TRI) and a precoding matrix indicator (TPMI) are jointly coded. In other words, each status bit in the field corresponds to a transmission rank indication and a precoding matrix indicator corresponding to the quantity of transmission layers. Each TRI value corresponds to a group of precoding matrices, and a correspondence is shown in Table 1 to Table 7. When a quantity of transmission layers is indicated, a TPMI is used to indicate a precoding matrix selected from a group of precoding matrices corresponding to the quantity of transmission layers. Table 8 and Table 9 are examples of jointly coded a TRI and a TPMI. The indicated quantity of transmission layers, namely, the TRI, is indicated by using a layer x in the table, where a value range of x is limited to 1. In other words, the maximum quantity of transmission layers in current PUSCH transmission is configured as 1. The indicated precoding matrix is indicated by using TPMI=y in the table, where y is a positive integer greater than or equal to 1, and a value range of y is determined based on a quantity of precoding matrices for a specific quantity of transmission layers in Table 1 to Table 7. For Table 8 and Table 9, a value range of y is determined based on quantities of precoding matrices in Table 1 and Table 2. In addition, a precoding matrix corresponding to specific y is further determined based on a maximum quantity of transmit antenna ports. In Table 8 and Table 9, the maximum quantity of transmit antenna ports is 4. Further, a precoding matrix corresponding to specific y is further determined based on a transmission waveform.

For example, TPMI=12. In the case of DFT-s-OFDM, a precoding matrix corresponding to TPMI=12 is $\frac{1}{2}\begin{bmatrix} 1 \\ 1 \\ 1 \\ -1 \end{bmatrix}$ (cor-

responding to Table 1). In the case of CP-OFDM, a precoding matrix corresponding to TPMI=12 is $\frac{1}{2}\begin{bmatrix} 1 \\ 1 \\ 1 \\ 1 \end{bmatrix}$ (corresponding to Table 2). Further, a value of a quantity of bits of the jointly coded and indicated TRI and TPMI, and a quantity of transmission layers and a precoding matrix indicator that correspond to each state value need to be determined based on the codebook subset configuration. For example, when the codebook subset configuration is the first codebook subset, a quantity of bits in the field is 3; or when the codebook subset configuration is the second codebook subset, a quantity of bits in the field is 4.

When any first index value m in five first index values corresponding to the first codebook subset is the same as any second index value n in 16 second index values corresponding to the second codebook subset, a value of a quantity of transmission layers and a precoding matrix indicator that correspond to the first index value m are the same as a value of a quantity of transmission layers and a precoding matrix indicator that correspond to the second index value n, and a precoding matrix associated with the precoding matrix indicator corresponding to the first index value m is the same as a precoding matrix associated with the precoding matrix indicator corresponding to the second index value n. For the first codebook subset configuration, index values 5 to 7 of the field are reserved, indicating that content corresponding to each of the index values is an empty set.

Optionally, Table 8 and Table 9 are used for the CP-OFDM waveform and the DFT-s-OFDM waveform.

Optionally, Table 8 and Table 9 are used for the CP-OFDM waveform, and Table 10 and Table 11 are used for the DFT-s-OFDM waveform.

**Table 8 Example 1 of jointly coded and indicated TRI and TPMI**

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |
| 2 | 1 layer: TPMI=2 | 2 | 1 layer: TPMI=2 |
| 3 | 1 layer: TPMI=3 | 3 | 1 layer: TPMI=3 |
| 4 | 1 layer: TPMI=13 | 4 | 1 layer: TPMI=13 |
| 5 | 1 layer: TPMI=4 | | |
| 6 | 1 layer: TPMI=5 | | |
| 7 | 1 layer: TPMI=6 | | |
| 8 | 1 layer: TPMI=7 | | |
| 9 | 1 layer: TPMI=8 | | |
| 10 | 1 layer: TPMI=9 | | |
| 11 | 1 layer: TPMI=10 | | |
| 12 | 1 layer: TPMI=11 | | |
| 13 | 1 layer: TPMI=12 | | |
| 14 | 1 layer: TPMI=14 | | |
| 15 | 1 layer: TPMI=15 | | |

**Table 9 Example 2 of jointly coded and indicated TRI and TPMI**

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |
| 2 | 1 layer: TPMI=2 | 2 | 1 layer: TPMI=2 |
| 3 | 1 layer: TPMI=3 | 3 | 1 layer: TPMI=3 |
| 4 | 1 layer: TPMI=4 | 4 | 1 layer: TPMI=4 |
| 5 | 1 layer: TPMI=8 | 5 | 1 layer: TPMI=8 |
| 6 | 1 layer: TPMI=13 | 6 | 1 layer: TPMI=13 |
| 7 | 1 layer: TPMI=5 | | |
| 8 | 1 layer: TPMI=6 | | |
| 9 | 1 layer: TPMI=7 | | |
| 10 | 1 layer: TPMI=9 | | |
| 11 | 1 layer: TPMI=10 | | |
| 12 | 1 layer: TPMI=11 | | |
| 13 | 1 layer: TPMI=12 | | |
| 14 | 1 layer: TPMI=14 | | |
| 15 | 1 layer: TPMI=15 | | |

**Table 10 Example 3 of jointly coded and indicated TRI and TPMI**

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |
| 2 | 1 layer: TPMI=2 | 2 | 1 layer: TPMI=2 |
| 3 | 1 layer: TPMI=3 | 3 | 1 layer: TPMI=3 |
| 4 | 1 layer: TPMI=13 | 4 | 1 layer: TPMI=13 |
| 5 | 1 layer: TPMI=4 | | |

| Field index value | Second codebook subset configuration | Field index value | First codebook subset configuration |
|---|---|---|---|
| 6 | 1 layer: TPMI=5 | | |
| 7 | 1 layer: TPMI=6 | | |
| 8 | 1 layer: TPMI=7 | | |
| 9 | 1 layer: TPMI=8 | | |
| 10 | 1 layer: TPMI=9 | | |
| 11 | 1 layer: TPMI=10 | | |
| 12 | 1 layer: TPMI=11 | | |
| 13 | 1 layer: TPMI=12 | | |
| 14 | 1 layer: TPMI=14 | | |
| 15 | 1 layer: TPMI=15 | | |
| 16 | 1 layer: TPMI=16 | | |
| 17 | 1 layer: TPMI=17 | | |
| 18 | 1 layer: TPMI=18 | | |
| 19 | 1 layer: TPMI=19 | | |

**Table 11 Example 4 of jointly coded and indicated TRI and TPMI**

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |
| 2 | 1 layer: TPMI=2 | 2 | 1 layer: TPMI=2 |
| 3 | 1 layer: TPMI=3 | 3 | 1 layer: TPMI=3 |
| 4 | 1 layer: TPMI=4 | 4 | 1 layer: TPMI=4 |
| 5 | 1 layer: TPMI=8 | 5 | 1 layer: TPMI=8 |
| 6 | 1 layer: TPMI=13 | 6 | 1 layer: TPMI=13 |
| 7 | 1 layer: TPMI=5 | | |
| 8 | 1 layer: TPMI=6 | | |

| Field index value | Second codebook subset configuration | Field index value | First codebook subset configuration |
|---|---|---|---|
| 9 | 1 layer: TPMI=7 | | |
| 10 | 1 layer: TPMI=9 | | |
| 11 | 1 layer: TPMI=10 | | |
| 12 | 1 layer: TPMI=11 | | |
| 13 | 1 layer: TPMI=12 | | |
| 14 | 1 layer: TPMI=14 | | |
| 15 | 1 layer: TPMI=15 | | |
| 16 | 1 layer: TPMI=16 | | |
| 17 | 1 layer: TPMI=17 | | |
| 18 | 1 layer: TPMI=18 | | |
| 19 | 1 layer: TPMI=19 | | |

Table 12 and Table 13 are other examples of jointly coded TRI and TPMI. The indicated quantity of transmission layers, namely, the TRI, is indicated by using a layer x in the table, where a value range of x in Table 12 and Table 13 is limited to {1, 2}. In other words, when the maximum quantity of transmission layers in current PUSCH transmission is configured as 2, the indicated quantity of transmission layers may be 1 or 2. The indicated precoding matrix is indicated by using TPMI=y in the table, where y is a positive integer greater than or equal to 1, and a value range of y is determined based on a quantity of precoding matrices for a specific quantity of transmission layers in Table 1 to Table 7. For Table 10 and Table 11, a value range of y is determined based on quantities of precoding matrices in Table 2 and Table 3. In addition, a precoding matrix corresponding to specific y is further determined based on a maximum quantity of transmit antenna ports. In Table 12 and Table 13, the maximum quantity of transmit antenna ports is 4. Further, a value of a quantity of bits of the jointly coded and indicated TRI and TPMI, and a quantity of transmission layers and a precoding matrix indicator that correspond to each state value need to be determined based on the codebook subset configuration. For example, when the codebook subset configuration is the first codebook subset, a quantity of bits in the field is 4; or when the codebook subset configuration is the second codebook subset, a quantity of bits in the field is 5.

When any first index value m in 12 first index values corresponding to the first codebook subset is the same as any second index value n in 30 second index values corresponding to the second codebook subset, a value of a quantity of transmission layers and a precoding matrix indicator that correspond to the first index value m are the same as a value of a quantity of transmission layers and a precoding matrix indicator that correspond to the second index value n, and a precoding matrix associated with the precoding matrix indicator corresponding to the first index value m is the same as a precoding matrix associated with the precoding matrix indicator corresponding to the second index value n.

**Table 12 Example 3 of jointly coded and indicated TRI and TPMI**

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |
| 2 | 1 layer: TPMI=2 | 2 | 1 layer: TPMI=2 |
| 3 | 1 layer: TPMI=3 | 3 | 1 layer: TPMI=3 |
| 4 | 2 layers: TPMI=0 | 4 | 2 layers: TPMI=0 |
| 5 | 2 layers: TPMI=1 | 5 | 2 layers: TPMI=1 |
| 6 | 2 layers: TPMI=2 | 6 | 2 layers: TPMI=2 |
| 7 | 2 layers: TPMI=3 | 7 | 2 layers: TPMI=3 |
| 8 | 2 layers: TPMI=4 | 8 | 2 layers: TPMI=4 |
| 9 | 2 layers: TPMI=5 | 9 | 2 layers: TPMI=5 |
| 10 | 1 layer: TPMI=13 | 10 | 1 layer: TPMI=13 |
| 11 | 2 layers: TPMI=6 | 11 | 2 layers: TPMI=6 |
| 12 | 1 layer: TPMI=4 | | |
| 13 | 1 layer: TPMI=5 | | |
| 14 | 1 layer: TPMI=6 | | |
| 15 | 1 layer: TPMI=7 | | |
| 16 | 1 layer: TPMI=8 | | |
| 17 | 1 layer: TPMI=9 | | |
| 18 | 1 layer: TPMI=10 | | |
| 19 | 1 layer: TPMI=11 | | |
| 20 | 1 layer: TPMI=12 | | |
| 21 | 1 layer: TPMI=14 | | |

| Field index value | Second codebook subset configuration | Field index value | First codebook subset configuration |
|---|---|---|---|
| 22 | 1 layer: TPMI=15 | | |
| 23 | 2 layers: TPMI=7 | | |
| 24 | 2 layers: TPMI=8 | | |
| 25 | 2 layers: TPMI=9 | | |
| 26 | 2 layers: TPMI=10 | | |
| 27 | 2 layers: TPMI=11 | | |
| 28 | 2 layers: TPMI=12 | | |
| 29 | 2 layers: TPMI=13 | | |

**Table 13 Example 4 of jointly coded and indicated TRI and TPMI**

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |
| 2 | 1 layer: TPMI=2 | 2 | 1 layer: TPMI=2 |
| 3 | 1 layer: TPMI=3 | 3 | 1 layer: TPMI=3 |
| 4 | 1 layer: TPMI=13 | 4 | 1 layer: TPMI=13 |
| 5 | 2 layers: TPMI=0 | 5 | 2 layers: TPMI=0 |
| 6 | 2 layers: TPMI=1 | 6 | 2 layers: TPMI=1 |
| 7 | 2 layers: TPMI=2 | 7 | 2 layers: TPMI=2 |
| 8 | 2 layers: TPMI=3 | 8 | 2 layers: TPMI=3 |
| 9 | 2 layers: TPMI=4 | 9 | 2 layers: TPMI=4 |
| 10 | 2 layers: TPMI=5 | 10 | 2 layers: TPMI=5 |
| 11 | 2 layers: TPMI=6 | 11 | 2 layers: TPMI=6 |
| 12 | 1 layer: TPMI=4 | | |
| 13 | 1 layer: TPMI=5 | | |
| 14 | 1 layer: TPMI=6 | | |

| Field index value | Second codebook subset configuration | Field index value | First codebook subset configuration |
|---|---|---|---|
| 15 | 1 layer: TPMI=7 | | |
| 16 | 1 layer: TPMI=8 | | |
| 17 | 1 layer: TPMI=9 | | |
| 18 | 1 layer: TPMI=10 | | |
| 19 | 1 layer: TPMI=11 | | |
| 20 | 1 layer: TPMI=12 | | |
| 21 | 1 layer: TPMI=14 | | |
| 22 | 1 layer: TPMI=15 | | |
| 23 | 2 layers: TPMI=7 | | |
| 24 | 2 layers: TPMI=8 | | |
| 25 | 2 layers: TPMI=9 | | |
| 26 | 2 layers: TPMI=10 | | |
| 27 | 2 layers: TPMI=11 | | |
| 28 | 2 layers: TPMI=12 | | |
| 29 | 2 layers: TPMI=13 | | |

Table 14 and Table 15 are other examples of jointly coded TRI and TPMI. A value range of the indicated quantity of transmission layers may be limited to {1, 2, 3, 4}, {1, 2, 3}, or {1, 2}. In other words, the maximum quantity of transmission layers in current PUSCH transmission is configured as 4, 3, or 2. The indicated precoding matrix is indicated by using TPMI=y in the table, where y is a positive integer greater than or equal to 1, and a value range of y is determined based on a quantity of precoding matrices for a specific quantity of transmission layers in Table 2 to Table 5. In addition, a precoding matrix corresponding to specific y is further determined based on a maximum quantity of transmit antenna ports. For example, the maximum quantity of transmit antenna ports is 4. Further, a value of a quantity of bits of the jointly coded and indicated TRI and TPMI, and a quantity of transmission layers and a precoding matrix indicator that correspond to each state value need to be determined based on the codebook subset configuration. For example, when the codebook subset configuration is the first codebook subset, a quantity of bits in the field is 4; or when the codebook subset configuration is the second codebook subset, a quantity of bits in the field is 6.

When any first index value m in 15 first index values corresponding to the first codebook subset is the same as any second index value n in 36 second index values corresponding to the second codebook subset, a value of a quantity of transmission layers and a precoding matrix indicator that correspond to the first index value m are the same as a value of a quantity of transmission layers and a precoding matrix indicator that correspond to the second index value n, and a precoding matrix associated with the precoding matrix indicator corresponding to the first index value m is the same as a precoding matrix associated with the precoding matrix indicator corresponding to the second index value n.

**Table 14 Example 5 of jointly coded and indicated TRI and TPMI**

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |
| 2 | 1 layer: TPMI=2 | 2 | 1 layer: TPMI=2 |
| 3 | 1 layer: TPMI=3 | 3 | 1 layer: TPMI=3 |
| 4 | 2 layers: TPMI=0 | 4 | 2 layers: TPMI=0 |
| 5 | 2 layers: TPMI=1 | 5 | 2 layers: TPMI=1 |
| 6 | 2 layers: TPMI=2 | 6 | 2 layers: TPMI=2 |
| 7 | 2 layers: TPMI=3 | 7 | 2 layers: TPMI=3 |
| 8 | 2 layers: TPMI=4 | 8 | 2 layers: TPMI=4 |
| 9 | 2 layers: TPMI=5 | 9 | 2 layers: TPMI=5 |
| 10 | 3 layers: TPMI=0 | 10 | 3 layers: TPMI=0 |
| 11 | 4 layers: TPMI=0 | 11 | 4 layers: TPMI=0 |
| 12 | 1 layer: TPMI=13 | 12 | 1 layer: TPMI=13 |
| 13 | 2 layers: TPMI=6 | 13 | 2 layers: TPMI=6 |
| 14 | 3 layers: TPMI=1 | 14 | 3 layers: TPMI=1 |
| 15 | 1 layer: TPMI=4 | | |
| 16 | 1 layer: TPMI=5 | | |
| 17 | 1 layer: TPMI=6 | | |
| 18 | 1 layer: TPMI=7 | | |
| 19 | 1 layer: TPMI=8 | | |

| Field index value | Second codebook subset configuration | Field index value | First codebook subset configuration |
|---|---|---|---|
| 20 | 1 layer: TPMI=9 | | |
| 21 | 1 layer: TPMI=10 | | |
| 22 | 1 layer: TPMI=11 | | |
| 23 | 1 layer: TPMI=12 | | |
| 24 | 1 layer: TPMI=14 | | |
| 25 | 1 layer: TPMI=15 | | |
| 26 | 2 layers: TPMI=7 | | |
| 27 | 2 layers: TPMI=8 | | |
| 28 | 2 layers: TPMI=9 | | |
| 29 | 2 layers: TPMI=10 | | |
| 30 | 2 layers: TPMI=11 | | |
| 31 | 2 layers: TPMI=12 | | |
| 32 | 2 layers: TPMI=13 | | |
| 33 | 3 layers: TPMI=2 | | |
| 34 | 4 layers: TPMI=1 | | |
| 35 | 4 layers: TPMI=2 | | |

**Table 15 Example 6 of jointly coded and indicated TRI and TPMI**

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |
| 2 | 1 layer: TPMI=2 | 2 | 1 layer: TPMI=2 |
| 3 | 1 layer: TPMI=3 | 3 | 1 layer: TPMI=3 |
| 4 | 1 layer: TPMI=13 | 4 | 1 layer: TPMI=13 |
| 5 | 2 layers: TPMI=0 | 5 | 2 layers: TPMI=0 |
| 6 | 2 layers: TPMI=1 | 6 | 2 layers: TPMI=1 |

| Field index value | Second codebook subset configuration | Field index value | First codebook subset configuration |
|---|---|---|---|
| 7 | 2 layers: TPMI=2 | 7 | 2 layers: TPMI=2 |
| 8 | 2 layers: TPMI=3 | 8 | 2 layers: TPMI=3 |
| 9 | 2 layers: TPMI=4 | 9 | 2 layers: TPMI=4 |
| 10 | 2 layers: TPMI=5 | 10 | 2 layers: TPMI=5 |
| 11 | 2 layers: TPMI=6 | 11 | 2 layers: TPMI=6 |
| 12 | 3 layers: TPMI=0 | 12 | 3 layers: TPMI=0 |
| 13 | 3 layers: TPMI=1 | 13 | 3 layers: TPMI=1 |
| 14 | 4 layers: TPMI=0 | 14 | 4 layers: TPMI=0 |
| 15 | 1 layer: TPMI=4 | | |
| 16 | 1 layer: TPMI=5 | | |
| 17 | 1 layer: TPMI=6 | | |
| 18 | 1 layer: TPMI=7 | | |
| 19 | 1 layer: TPMI=8 | | |
| 20 | 1 layer: TPMI=9 | | |
| 21 | 1 layer: TPMI=10 | | |
| 22 | 1 layer: TPMI=11 | | |
| 23 | 1 layer: TPMI=12 | | |
| 24 | 1 layer: TPMI=14 | | |
| 25 | 1 layer: TPMI=15 | | |
| 26 | 2 layers: TPMI=7 | | |
| 27 | 2 layers: TPMI=8 | | |
| 28 | 2 layers: TPMI=9 | | |
| 29 | 2 layers: TPMI=10 | | |
| 30 | 2 layers: TPMI=11 | | |
| 31 | 2 layers: TPMI=12 | | |
| 32 | 2 layers: TPMI=13 | | |
| 33 | 3 layers: TPMI=2 | | |
| 34 | 4 layers: TPMI=1 | | |

| Field index value | Second codebook subset configuration | Field index value | First codebook subset configuration |
|---|---|---|---|
| 35 | 4 layers: TPMI=2 | | |

Table 16 and Table 17 are other examples of jointly coded TRI and TPMI. A value range of the indicated quantity of transmission layers may be limited to {1, 2, 3, 4}, {1, 2, 3}, or {1, 2}. In other words, the maximum quantity of transmission layers in current PUSCH transmission is configured as 4, 3, or 2. The indicated precoding matrix is indicated by using TPMI=y in the table, where y is a positive integer greater than or equal to 1, and a value range of y is determined based on a quantity of precoding matrices for a specific quantity of transmission layers in Table 2 to Table 5. In addition, a precoding matrix corresponding to specific y is further determined based on a maximum quantity of transmit antenna ports. For example, the maximum quantity of transmit antenna ports is 4. Further, a value of a quantity of bits of the jointly coded and indicated TRI and TPMI, and a quantity of transmission layers and a precoding matrix indicator that correspond to each state value need to be determined based on the codebook subset configuration. For example, when the codebook subset configuration is the first codebook subset, a quantity of bits in the field is 5; or when the codebook subset configuration is the second codebook subset, a quantity of bits in the field is 6.

When any first index value m in 17 first index values corresponding to the first codebook subset is the same as any second index value n in 38 second index values corresponding to the second codebook subset, a value of a quantity of transmission layers and a precoding matrix indicator that correspond to the first index value m are the same as a value of a quantity of transmission layers and a precoding matrix indicator that correspond to the second index value n, and a precoding matrix associated with the precoding matrix indicator corresponding to the first index value m is the same as a precoding matrix associated with the precoding matrix indicator corresponding to the second index value n.

**Table 16 Example 5 of jointly coded and indicated TRI and TPMI**

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |
| 2 | 1 layer: TPMI=2 | 2 | 1 layer: TPMI=2 |

| Field index value | Second codebook subset configuration | Field index value | First codebook subset configuration |
|---|---|---|---|
| 3 | 1 layer: TPMI=3 | 3 | 1 layer: TPMI=3 |
| 4 | 2 layers: TPMI=0 | 4 | 2 layers: TPMI=0 |
| 5 | 2 layers: TPMI=1 | 5 | 2 layers: TPMI=1 |
| 6 | 2 layers: TPMI=2 | 6 | 2 layers: TPMI=2 |
| 7 | 2 layers: TPMI=3 | 7 | 2 layers: TPMI=3 |
| 8 | 2 layers: TPMI=4 | 8 | 2 layers: TPMI=4 |
| 9 | 2 layers: TPMI=5 | 9 | 2 layers: TPMI=5 |
| 10 | 3 layers: TPMI=0 | 10 | 3 layers: TPMI=0 |
| 11 | 4 layers: TPMI=0 | 11 | 4 layers: TPMI=0 |
| 12 | 1 layer: TPMI=13 | 12 | 1 layer: TPMI=13 |
| 13 | 1 layer: TPMI=4 | 13 | 1 layer: TPMI=4 |
| 14 | 1 layer: TPMI=8 | 14 | 1 layer: TPMI=8 |
| 15 | 2 layers: TPMI=6 | 15 | 2 layers: TPMI=6 |
| 16 | 3 layers: TPMI=1 | 16 | 3 layers: TPMI=1 |
| 17 | 1 layer: TPMI=4 | | |
| 18 | 1 layer: TPMI=5 | | |
| 19 | 1 layer: TPMI=6 | | |
| 20 | 1 layer: TPMI=7 | | |
| 21 | 1 layer: TPMI=8 | | |
| 22 | 1 layer: TPMI=9 | | |
| 23 | 1 layer: TPMI=10 | | |
| 24 | 1 layer: TPMI=11 | | |
| 25 | 1 layer: TPMI=12 | | |
| 26 | 1 layer: TPMI=14 | | |
| 27 | 1 layer: TPMI=15 | | |
| 28 | 2 layers: TPMI=7 | | |
| 29 | 2 layers: TPMI=8 | | |
| 30 | 2 layers: TPMI=9 | | |

| Field index value | Second codebook subset configuration | Field index value | First codebook subset configuration |
|---|---|---|---|
| 31 | 2 layers: TPMI=10 | | |
| 32 | 2 layers: TPMI=11 | | |
| 33 | 2 layers: TPMI=12 | | |
| 34 | 2 layers: TPMI=13 | | |
| 35 | 3 layers: TPMI=2 | | |
| 36 | 4 layers: TPMI=1 | | |
| 37 | 4 layers: TPMI=2 | | |

**Table 17 Example 6 of jointly coded and indicated TRI and TPMI**

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |
| 2 | 1 layer: TPMI=2 | 2 | 1 layer: TPMI=2 |
| 3 | 1 layer: TPMI=3 | 3 | 1 layer: TPMI=3 |
| 4 | 1 layer: TPMI=4 | 4 | 1 layer: TPMI=4 |
| 5 | 1 layer: TPMI=8 | 5 | 1 layer: TPMI=8 |
| 6 | 1 layer: TPMI=13 | 6 | 1 layer: TPMI=13 |
| 7 | 2 layers: TPMI=0 | 7 | 2 layers: TPMI=0 |
| 8 | 2 layers: TPMI=1 | 8 | 2 layers: TPMI=1 |
| 9 | 2 layers: TPMI=2 | 9 | 2 layers: TPMI=2 |
| 10 | 2 layers: TPMI=3 | 10 | 2 layers: TPMI=3 |
| 11 | 2 layers: TPMI=4 | 11 | 2 layers: TPMI=4 |
| 12 | 2 layers: TPMI=5 | 12 | 2 layers: TPMI=5 |
| 13 | 2 layers: TPMI=6 | 13 | 2 layers: TPMI=6 |
| 14 | 3 layers: TPMI=0 | 14 | 3 layers: TPMI=0 |
| 15 | 3 layers: TPMI=1 | 15 | 3 layers: TPMI=1 |

| Field index value | Second codebook subset configuration | Field index value | First codebook subset configuration |
|---|---|---|---|
| 16 | 4 layers: TPMI=0 | 16 | 4 layers: TPMI=0 |
| 17 | 1 layer: TPMI=4 | | |
| 18 | 1 layer: TPMI=5 | | |
| 19 | 1 layer: TPMI=6 | | |
| 20 | 1 layer: TPMI=7 | | |
| 21 | 1 layer: TPMI=8 | | |
| 22 | 1 layer: TPMI=9 | | |
| 23 | 1 layer: TPMI=10 | | |
| 24 | 1 layer: TPMI=11 | | |
| 25 | 1 layer: TPMI=12 | | |
| 26 | 1 layer: TPMI=14 | | |
| 27 | 1 layer: TPMI=15 | | |
| 28 | 2 layers: TPMI=7 | | |
| 29 | 2 layers: TPMI=8 | | |
| 30 | 2 layers: TPMI=9 | | |
| 31 | 2 layers: TPMI=10 | | |
| 32 | 2 layers: TPMI=11 | | |
| 33 | 2 layers: TPMI=12 | | |
| 34 | 2 layers: TPMI=13 | | |
| 35 | 3 layers: TPMI=2 | | |
| 36 | 4 layers: TPMI=1 | | |
| 37 | 4 layers: TPMI=2 | | |

In Table 16, quantities of transmission layers and TPMIs that correspond to index values 12 to 16 of the first codebook subset configuration and the second codebook subset configuration may alternatively be:

| 12 | 1 layer: TPMI=4 |
| 13 | 1 layer: TPMI=8 |
| 14 | 1 layer: TPMI=13 |

| 15 | 2 layers: TPMI=6 |
| 16 | 3 layers: TPMI=1 |

or

| 12 | 1 layer: TPMI=13 |
| 13 | 2 layers: TPMI=6 |
| 14 | 3 layers: TPMI=1 |
| 15 | 1 layer: TPMI=4 |
| 16 | 1 layer: TPMI=8 |

In other words, an arrangement of the five combinations that are of a quantity of layers and a TPMI and that correspond to the index values 12 to 16 is not limited, provided that in the case of a same index value corresponding to the first codebook subset configuration and the second codebook subset configuration, a quantity of layers and a TPMI corresponding to the first codebook subset configuration are respectively the same as a quantity of layers and a TPMI corresponding to the second codebook subset configuration.

The technical details included in the method 300 are described above in detail with reference to the method 200. Therefore, details are not described herein again.

FIG. 3 is another implementation of the present invention. In a specific implementation process, step 402 may be performed by a network device, and step 404 may be performed by a terminal device.

Step 402: Send second transmission parameter control information based on configuration information of an SRS resource. Specifically, a quantity of bits in a first transmission indication field in the second transmission parameter control information is determined based on a largest quantity of ports of an SRS resource in a plurality of configured SRS resources, where the first transmission indication field is used to indicate a quantity of transmission layers for PUSCH transmission and a corresponding precoding matrix; and a quantity of zero-padding bits in the second transmission parameter control information is determined based on the quantity of ports that is of the SRS resource and that is indicated by the second transmission parameter control information.

For example, the second transmission parameter control information is DCI for scheduling a PUSCH, and the first transmission indication field is used to indicate a quantity of transmission layers and a corresponding TPMI for the PUSCH. The largest quantity of ports of the SRS resource in the plurality of SRS resources is used to determine a quantity (N1) of bits in the first transmission indication field. The second transmission parameter control information further includes an SRS resource indication (SRS resource indication, SRI) field, and the field is used to indicate to select one of the plurality of configured SRS resources. The quantity of ports that is of the SRS resource and that is indicated by the SRI field is used to determine a quantity (N2) of valid bits and a quantity of zero-padding bits. The quantity of valid bits is a quantity of bits for indicating a TPMI and a quantity of transmission layers, and the quantity of zero-padding bits is N1-N2.

For example, quantities of ports of two SRS resources are configured as two and four, the quantity of ports of the SRS resource being 4 is used to determine the quantity of bits in the first transmission indication field, that is, a quantity of rows of a TPMI indicated by the first transmission indication field is four. The SRI is used to indicate to select whether the SRS resource whose quantity of ports is two or the SRS resource whose quantity of ports is four. When the SRI indicates an SRS resource having four ports, the quantity N1 of bits of the first transmission indication field is the same as the quantity N2 of valid bits, and there is no quantity of zero-padding bits. When the SRI indicates an SRS resource having two ports, because a quantity of bits that corresponds to a four-antenna codebook is different from a quantity of bits that corresponds to a two-antenna codebook, the quantity N1 of bits of the first transmission indication field is different from the quantity N2 of valid bits, and there is a quantity N1-N2 of zero-padding bits.

Optionally, N zero-padding bits are located at the last N bits in the second transmission parameter control information. For example, a total quantity of bits in the second transmission parameter control information is X1, the first X1-N bits are bits indicating valid information, and the last N bits are zero-padding bits.

Optionally, N zero-padding bits are located at N bits following valid bits of the first transmission indication field in the second transmission parameter control information. For example, a total quantity of bits in the second transmission parameter control information is X1, the first X1-K bits are bits indicating valid information, where K>N, and N bits in K bits are corresponding zero-padding bits.

Optionally, N zero-padding bits are located at N bits following valid bits in the first transmission parameter control information. For example, the first transmission parameter control information is located in the $k_0$th bit to the $k_i$th bit in the second transmission parameter control information, and a quantity of valid bits that is determined based on the quantity of bits of the SRS resource, where the quantity of bits of the SRS resource is indicated by the SRI is N2. In this case, the $k_0$th bit to the $k_{N2-1}$th bit are valid bits, and the $k_{N2}$th bit to the $k_i$th bit are zero-padding bits.

Step 404: Receive the second transmission parameter control information based on the configuration information of the SRS resource. Specifically, a quantity of bits in a first transmission indication field in the second transmission parameter control information is determined based on a largest quantity of ports of an SRS resource in a plurality of configured SRS resources, where the first transmission indication field is used to indicate a quantity of transmission layers for PUSCH transmission and a corresponding precoding matrix; and a quantity of zero-padding bits in the second transmission parameter control information is determined based on the quantity of ports that is of the SRS resource and that is indicated by the second transmission parameter control information.

For example, the second transmission parameter control information is DCI for scheduling a PUSCH, and the first transmission indication field is used to indicate a quantity of transmission layers and a corresponding TPMI for the PUSCH. The largest quantity of ports of the SRS resource in the plurality of SRS resources is used to determine a quantity (N1) of bits in the first transmission indication field. The second transmission parameter control information further includes an SRS resource indication (SRS resource indication, SRI) field, and the field is used to indicate to select one of the plurality of configured SRS resources. The quantity of ports that is of the SRS resource and that is indicated by the SRI field is used to determine a quantity (N2) of valid bits and a quantity of zero-padding bits. The quantity of valid bits is a quantity of bits for indicating a TPMI and a quantity of transmission layers, and the quantity of zero-padding bits is N1-N2.

For example, quantities of ports of two SRS resources are configured as two and four, the quantity of ports of the SRS resource being 4 is used to determine the quantity of bits in the first transmission indication field, that is, a quantity of rows of a TPMI indicated by the first transmission indication field is four. The SRI is used to indicate to select whether the SRS resource whose quantity of ports is two or the SRS resource whose quantity of ports is four. When the SRI indicates an SRS resource having four ports, the quantity N1 of bits of the first transmission indication field is the same as the quantity N2 of valid bits, and there is no quantity of zero-padding bits. When the SRI indicates an SRS resource having two ports, because a quantity of bits that corresponds to a four-antenna codebook is different from a quantity of bits that corresponds to a two-antenna codebook, the quantity N1 of bits of the first transmission indication field is different from the quantity N2 of valid bits, and there is a quantity N1-N2 of zero-padding bits.

Optionally, N zero-padding bits are located at the last N bits in the second transmission parameter control information. For example, a total quantity of bits in the second transmission parameter control information is X1, the first X1-N bits are bits indicating valid information, and the last N bits are zero-padding bits.

Optionally, N zero-padding bits are located at N bits following valid bits of the first transmission indication field in the second transmission parameter control information. For example, a total quantity of bits in the second transmission parameter control information is X1, the first X1-K bits are bits indicating valid information, where K>N, and N bits in K bits are corresponding zero-padding bits.

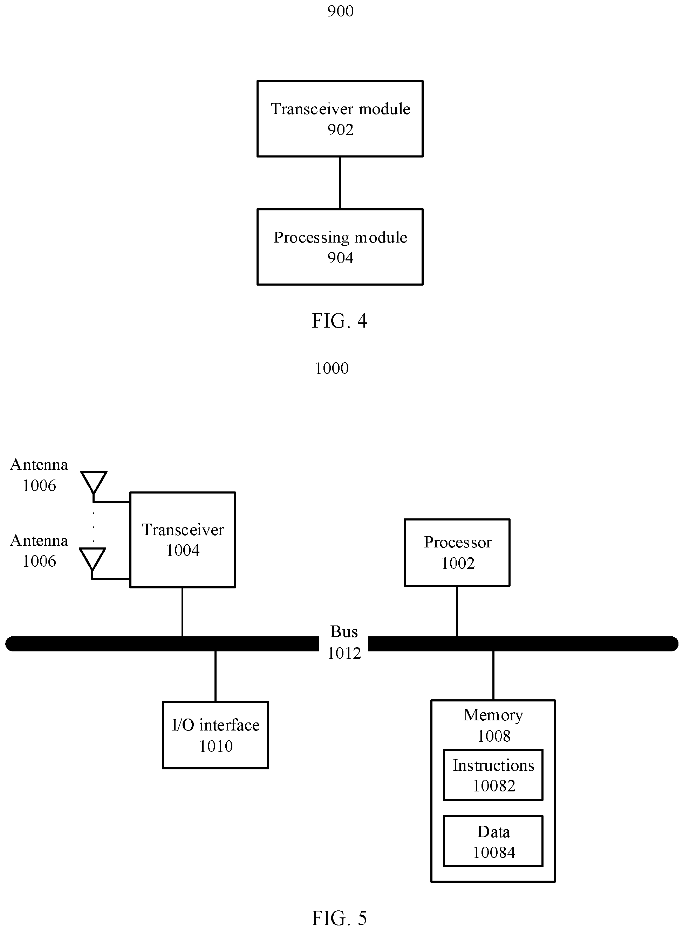

Optionally, N zero-padding bits are located at N bits following valid bits in the first transmission parameter control information. For example, the first transmission parameter control information is located in the $k_0$th bit to the $k_i$th bit in the second transmission parameter control information, and a quantity of valid bits that is determined based on the quantity of bits of the SRS resource, where the quantity of bits of the SRS resource is indicated by the SRI is N2. In this case, the $k_0$th bit to the $k_{N2-1}$th bit are valid bits, and the $k_{N2}$th bit to the $k_i$th bit are zero-padding bits. FIG. 4 is an example schematic diagram of a logical structure of a communication device 900 according to an embodiment of the present invention. In a specific implementation process, the communication device 900 may be the access device or the user equipment described above. As shown in FIG. 4, the communication device 900 includes a transceiver module 902 and a processing module 904.

When the communication device 900 is the user equipment, the transceiver module 902 may be configured to perform steps 302, 402, and 702, and the processing module 904 is configured to perform steps 304, 404, and 704.

When the communication device 900 is the access device, the transceiver module 902 may be configured to perform steps 504, 604, and 804, and the processing module 904 is configured to perform steps 502, 602, and 802.

FIG. 5 is an example schematic diagram of a hardware structure of a communication device 1000 according to an embodiment of the present invention. In a specific implementation process, the communication device 1000 may be the access device or the user equipment described above. As shown in FIG. 5, the communication device 1000 includes a processor 1002, a transceiver 1004, a plurality of antennas 1006, a memory 1008, an I/O (input/output, Input/Output) interface 1010, and a bus 1012. The memory 1008 is further configured to store instructions 10082 and data 10084. In addition, the processor 1002, the transceiver 1004, the memory 1008, and the I/O interface 1010 are communicatively connected to each other through the bus 1012, and the plurality of antennas 1006 are connected to the transceiver 1004. In a specific implementation process, the processor 1002, the transceiver 1004, the memory 1008, and the I/O interface 1010 may alternatively be communicatively connected to each other in another connection manner other than using the bus 1012.

The processor 1002 may be a general-purpose processor, for example, a central processing unit (Central Processing Unit, CPU), or may be a dedicated processor, for example, a digital signal processor (Digital Signal Processor, DSP), an application-specific integrated circuit (Application-Specific Integrated Circuit, ASIC), or a field programmable gate array (Field Programmable Gate Array, FPGA). This is not limited. In addition, the processor 1002 may alternatively be a combination of a plurality of processors. The processor 1002 may be a processor specifically designed to perform specific steps and/or operations, or a processor that reads and executes the instructions 10082 stored in the memory 1008 to perform the specific steps and/or operations. The processor 1002 may use the data 10084 when performing the specific steps and/or operations. Specially, the processor 1002 is configured to perform an operation of the processing module 904.

The transceiver 1004 sends a signal through at least one of the plurality of antennas 1006, and receives a signal through at least one of the plurality of antennas 1006. Specially, the transceiver 1004 is configured to perform an operation of the transceiver module 902.

The memory 1008 may be a memory of various types of storage media, for example, a random access memory (Random Access Memory, RAM), a read-only memory (Read Only Memory, ROM), a non-volatile RAM (Non-Volatile RAM, NVRAM), a programmable ROM (Programmable ROM, PROM), an erasable PROM (Erasable PROM, EPROM), an electrically erasable PROM (Electrically Erasable PROM, EEPROM), a flash memory, an optical memory, and a register. The memory 1008 is specifically configured to store the instructions 10082 and the data 10084. The processor 1002 may perform specific steps and/or operations by reading and executing the instructions 10082 stored in the memory 1008. The processor 1002 may use the data 10084 when performing the specific operations and/or steps.

The I/O interface 1010 is configured to receive instructions and/or data from a peripheral device, and output instructions and/or data to the peripheral device.

It should be noted that, in a specific implementation process, the communication device 1000 may further include other hardware components, which are not enumerated in this specification.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedure or functions according to embodiments of the present invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, DVD), a semiconductor medium (for example, a solid-state drive Solid-State Drive (SSD)), or the like.

To sum up, the foregoing descriptions are merely embodiments of the present invention, but are not intended to limit the protection scope of the present invention. Any modification, equivalent replacement, or improvement made within the spirit and principle of the present invention shall fall within the protection scope of the present invention.

**Claims**

1. A receiving parameter indication method, wherein the method comprises:

receiving transmission parameter indication information, wherein the transmission parameter indication information is used to indicate an index value in an index value set corresponding to a codebook subset configuration, and the codebook subset configuration comprises a first codebook subset configuration and a second codebook subset configuration, wherein

an index value in the index value set corresponds to a value of a quantity of transmission layers and a precoding matrix indicator, wherein an index value set corresponding to the first codebook subset configuration comprises M first index values, and an index value set corresponding to the second codebook subset configuration comprises N second index values, wherein the M first index values comprise M natural numbers from 0 to M-1, the N second index values comprise N natural numbers from 0 to N-1, M is a positive integer greater than or equal to 1, and N is a positive integer greater than M;

the first codebook subset configuration comprises a non-coherent codeword and a fully-coherent codeword, and the second codebook subset configuration comprise a non-coherent codeword, a partially-coherent codeword, and a fully-coherent codeword; and

the first codebook subset configuration corresponds to a non-coherent capability, and the first codebook subset configuration and the second codebook subset configuration correspond to a partially-coherent capability; and

determining the value of the quantity of layers and a precoding matrix based on the transmission parameter indication information.

2. The method according to claim 1, wherein when any first index value m in the M first index values is the same as any second index value n in the N second index values, a value of a quantity of transmission layers and a precoding matrix indicator that correspond to the first index value m are the same as a value of a quantity of transmission layers and a precoding matrix indicator that correspond to the second index value n, and a precoding matrix associated with the precoding matrix indicator corresponding to the first index value m is the same as a precoding matrix associated with the precoding matrix indicator corresponding to the second index value n, wherein

the first index value m and the second index value n are non-reserved index values, and the non-reserved index value corresponds to a value of a quantity of transmission layers and a precoding matrix indicator; and

m is any natural number greater than or equal to 0 and less than M, and n is any natural number greater than or equal to 0 and less than N.

3. The method according to either claim 1 or 2, wherein the precoding matrix is determined based on the value of the quantity of transmission layers, an antenna configuration, a specific waveform, and the precoding matrix indicator.

4. The method according to any one of claims 1 to 3, wherein a correspondence among the index value, the value of the quantity of transmission layers, and the precoding matrix indicator satisfies one or more of the following tables:

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |
| … | … | … | … |
| 3 | 1 layer: TPMI=3 | 3 | 1 layer: TPMI=3 |
| 4 | 1 layer: TPMI=13 | 4 | 1 layer: TPMI=13 |
| 5 | 1 layer: TPMI=4 | | |
| … | … | | |
| 13 | 1 layer: TPMI=12 | | |
| 14 | 1 layer: TPMI=14 | | |
| 15 | 1 layer: TPMI=15 | | |

or

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |
| … | … | … | … |
| 3 | 1 layer: TPMI=3 | 3 | 1 layer: TPMI=3 |
| 4 | 2 layers: TPMI=0 | 4 | 2 layers: TPMI=0 |
| … | … | … | … |
| 9 | 2 layers: TPMI=5 | 9 | 2 layers: TPMI=5 |
| 10 | 3 layers: TPMI=0 | 10 | 3 layers: TPMI=0 |
| 11 | 4 layers: TPMI=0 | 11 | 4 layers: TPMI=0 |

| Field index value | Second codebook subset configuration | Field index value | First codebook subset configuration |
|---|---|---|---|
| 12 | 1 layer: TPMI=13 | 12 | 1 layer: TPMI=13 |
| 13 | 2 layers: TPMI=6 | 13 | 2 layers: TPMI=6 |
| 14 | 3 layers: TPMI=1 | 14 | 3 layers: TPMI=1 |
| 15 | 1 layer: TPMI=4 | | |
| … | … | | |
| 23 | 1 layer: TPMI=12 | | |
| 24 | 1 layer: TPMI=14 | | |
| 25 | 1 layer: TPMI=15 | | |
| 26 | 2 layers: TPMI=7 | | |
| … | … | | |
| 32 | 2 layers: TPMI=13 | | |
| 33 | 3 layers: TPMI=2 | | |
| 34 | 4 layers: TPMI=1 | | |
| 35 | 4 layers: TPMI=2 | | |

or

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |
| … | … | … | … |
| 3 | 1 layer: TPMI=3 | 3 | 1 layer: TPMI=3 |
| 4 | 2 layers: TPMI=0 | 4 | 2 layers: TPMI=0 |
| … | … | … | … |
| 9 | 2 layers: TPMI=5 | 9 | 2 layers: TPMI=5 |
| 10 | 1 layer: TPMI=13 | 10 | 1 layer: TPMI=13 |
| 11 | 2 layers: TPMI=6 | 11 | 2 layers: TPMI=6 |
| 12 | 1 layer: TPMI=4 | | |

| Field index value | Second codebook subset configuration | Field index value | First codebook subset configuration |
|---|---|---|---|
| … | … | | |
| 20 | 1 layer: TPMI=12 | | |
| 21 | 1 layer: TPMI=14 | | |
| 22 | 1 layer: TPMI=15 | | |
| 23 | 2 layers: TPMI=7 | | |
| … | … | | |
| 29 | 2 layers: TPMI=13 | | |

5. The method according to any one of claims 1 to 4, wherein the method comprises:
receiving limitation information for a maximum quantity of transmission layers of a physical uplink shared channel PUSCH, wherein the limitation information for the maximum quantity of transmission layers is used to indicate a maximum quantity of transmission layers at which a second network device sends the PUSCH.

6. The method according to claim 5, wherein a value of the maximum quantity of transmission layers is one of 1, 2, 3, or 4.

7. The method according to claim 5 or 6, wherein for a same codebook subset configuration, index value sets corresponding to all values that are of the maximum quantity of transmission layers and that are greater than 2 are the same;

index value sets corresponding to a value 1 of the maximum quantity of transmission layers are different from index value sets corresponding to all values that are of the maximum quantity of transmission layers and that are greater than 1; and

index value sets corresponding to a value 2 of the maximum quantity of transmission layers are different from the index value sets corresponding to all the values that are of the maximum quantity of transmission layers and that are greater than 2.

8. The method according to any one of claims 1 to 7, wherein a value that corresponds to the index value indicated by the transmission parameter indication information and that is of the quantity of transmission layers is less than the value of the maximum quantity of transmission layers.

9. The method according to any one of claims 1 to 8, wherein when any fourth index value p in a fourth index value set corresponding to a value x of the maximum quantity of transmission layers is the same as any fifth index value q in a fifth index value set corresponding to a value y of the maximum quantity of transmission layers, a value of a quantity of transmission layers and a precoding matrix indicator that correspond to the fourth index value p are the same as a value of a quantity of transmission layers and a precoding matrix indicator that correspond to the fifth index value q, and a precoding matrix associated with the precoding matrix indicator corresponding to the fourth index value p is the same as a precoding matrix associated with the precoding matrix indicator corresponding to the fifth index value q, wherein

x and y are positive integers greater than X and less than or equal to K, p is any natural number greater than or equal to 0 and less than P, q is any natural number greater than or equal to 0 and less than Q, P is a quantity of index values comprised in the fourth index value set, Q is a quantity of index values comprised in the fifth index value set, and the fourth index value p and the fifth index value q are non-reserved index values.

10. A receiving parameter device, comprising:

a transceiver module, configured to receive transmission parameter indication information, wherein the transmission parameter indication information is used to indicate an index value in an index value set corresponding to a codebook subset configuration, and the codebook subset configuration comprises a first codebook subset configuration and a second codebook subset configuration, wherein

an index value in the index value set corresponds to a value of a quantity of transmission layers and a precoding matrix indicator, wherein an index value set corresponding to the first codebook subset configuration comprises M first index values, and an index value set corresponding to the second codebook subset configuration comprises N second index values, wherein the M first index values comprise M natural numbers from 0 to M-1, the N second index values comprise N natural numbers from 0 to N-1, M is a positive integer greater than or equal to 1, and N is a positive integer greater than M; the first codebook subset configuration comprises a non-coherent codeword and a fully-coherent codeword, and the second codebook subset configuration comprise a non-coherent codeword, a partially-coherent codeword, and a fully-coherent codeword; and

the first codebook subset configuration corresponds to a non-coherent capability, and the first codebook subset configuration and the second codebook subset configuration correspond to a partially-coherent capability; and

a processing module, configured to determine the value of the quantity of layers and a precoding matrix based on the transmission parameter indication information.

11. The device according to claim 10, wherein when any first index value m in the M first index values is the same as any second index value n in the N second index values, a value of a quantity of transmission layers and a precoding matrix indicator that correspond to the first index value m are the same as a value of a quantity of transmission layers and a precoding matrix indicator that correspond to the second index value n, and a precoding matrix associated with the precoding matrix indicator corresponding to the first index value m is the same as a precoding matrix associated with the precoding matrix indicator corresponding to the second index value n, wherein

the first index value m and the second index value n are non-reserved index values, and the non-reserved index value corresponds to a value of a quantity of transmission layers and a precoding matrix indicator; and

m is any natural number greater than or equal to 0 and less than M, and n is any natural number greater than or equal to 0 and less than N.

12. The device according to either claim 10 or 11, wherein the precoding matrix is determined based on the value of the quantity of transmission layers, an antenna configuration, a specific waveform, and the precoding matrix indicator.

13. The device according to any one of claims 10 to 12, wherein a correspondence among the index value, the value of the quantity of transmission layers, and the precoding matrix indicator satisfies one or more of the following tables:

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |
| … | … | … | … |
| 3 | 1 layer: TPMI=3 | 3 | 1 layer: TPMI=3 |
| 4 | 1 layer: TPMI=13 | 4 | 1 layer: TPMI=13 |
| 5 | 1 layer: TPMI=4 | | |
| … | … | | |
| 13 | 1 layer: TPMI=12 | | |
| 14 | 1 layer: TPMI=14 | | |
| 15 | 1 layer: TPMI=15 | | |

or

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |
| … | … | … | … |
| 3 | 1 layer: TPMI=3 | 3 | 1 layer: TPMI=3 |
| 4 | 2 layers: TPMI=0 | 4 | 2 layers: TPMI=0 |
| … | … | … | … |
| 9 | 2 layers: TPMI=5 | 9 | 2 layers: TPMI=5 |
| 10 | 3 layers: TPMI=0 | 10 | 3 layers: TPMI=0 |
| 11 | 4 layers: TPMI=0 | 11 | 4 layers: TPMI=0 |
| 12 | 1 layer: TPMI=13 | 12 | 1 layer: TPMI=13 |
| 13 | 2 layers: TPMI=6 | 13 | 2 layers: TPMI=6 |
| 14 | 3 layers: TPMI=1 | 14 | 3 layers: TPMI=1 |
| 15 | 1 layer: TPMI=4 | | |
| … | … | | |

| Field index value | Second codebook subset configuration | Field index value | First codebook subset configuration |
|---|---|---|---|
| 23 | 1 layer: TPMI=12 | | |
| 24 | 1 layer: TPMI=14 | | |
| 25 | 1 layer: TPMI=15 | | |
| 26 | 2 layers: TPMI=7 | | |
| … | … | | |
| 32 | 2 layers: TPMI=13 | | |
| 33 | 3 layers: TPMI=2 | | |
| 34 | 4 layers: TPMI=1 | | |
| 35 | 4 layers: TPMI=2 | | |

or

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |
| … | … | … | … |
| 3 | 1 layer: TPMI=3 | 3 | 1 layer: TPMI=3 |
| 4 | 2 layers: TPMI=0 | 4 | 2 layers: TPMI=0 |
| … | … | … | … |
| 9 | 2 layers: TPMI=5 | 9 | 2 layers: TPMI=5 |
| 10 | 1 layer: TPMI=13 | 10 | 1 layer: TPMI=13 |
| 11 | 2 layers: TPMI=6 | 11 | 2 layers: TPMI=6 |
| 12 | 1 layer: TPMI=4 | | |
| … | … | | |
| 20 | 1 layer: TPMI=12 | | |
| 21 | 1 layer: TPMI=14 | | |
| 22 | 1 layer: TPMI=15 | | |
| 23 | 2 layers: TPMI=7 | | |

| Field index value | Second codebook subset configuration | Field index value | First codebook subset configuration |
|---|---|---|---|
| … | … | | |
| 29 | 2 layers: TPMI=13 | | |

14. The device according to any one of claims 10 to 13, wherein
the transceiver module is further configured to receive limitation information for a maximum quantity of transmission layers of a physical uplink shared channel PUSCH, wherein the limitation information for the maximum quantity of transmission layers is used to indicate a maximum quantity of transmission layers at which a second network device sends the PUSCH.

15. The device according to claim 14, wherein a value of the maximum quantity of transmission layers is one of 1, 2, 3, or 4.

16. The device according to claim 14 or 15, wherein for a same codebook subset configuration, index value sets corresponding to all values that are of the maximum quantity of transmission layers and that are greater than 2 are the same;

index value sets corresponding to a value 1 of the maximum quantity of transmission layers are different from index value sets corresponding to all values that are of the maximum quantity of transmission layers and that are greater than 1; and

index value sets corresponding to a value 2 of the maximum quantity of transmission layers are different from the index value sets corresponding to all the values that are of the maximum quantity of transmission layers and that are greater than 2.

17. The device according to any one of claims 10 to 16, wherein a value that corresponds to the index value indicated by the transmission parameter indication information and that is of the quantity of transmission layers is less than the value of the maximum quantity of transmission layers.

18. The device according to any one of claims 10 to 17, wherein when any fourth index value p in a fourth index value set corresponding to a value x of the maximum quantity of transmission layers is the same as any fifth index value q in a fifth index value set corresponding to a value y of the maximum quantity of transmission layers, a value of a quantity of transmission layers and a precoding matrix indicator that correspond to the fourth index value p are the same as a value of a quantity of transmission layers and a precoding matrix indicator that correspond to the fifth index value q, and a precoding matrix associated with the precoding matrix indicator corresponding to the fourth index value p is the same as a precoding matrix associated with the precoding matrix indicator corresponding to the fifth index value q, wherein

x and y are positive integers greater than X and less than or equal to K, p is any natural number greater than or equal to 0 and less than P, q is any natural number greater than or equal to 0 and less than Q, P is a quantity of index values comprised in the fourth index value set, Q is a quantity of index values comprised in the fifth index value set, and the fourth index value p and the fifth index value q are non-reserved index values.

19. A receiving parameter device, comprising:

a transceiver, configured to receive transmission parameter indication information, wherein the transmission parameter indication information is used to indicate an index value in an index value set corresponding to a codebook subset configuration, and the codebook subset configuration comprises a first codebook subset configuration and a second codebook subset configuration, wherein an index value in the index value set corresponds to a value of a quantity of transmission layers and a precoding matrix indicator, wherein an index value set corresponding to the first codebook subset configuration comprises M first index values, and an index value set corresponding to the second codebook subset configuration comprises N second index values, wherein the M first index values comprise M natural numbers from 0 to M-1, the N second index values comprise N natural numbers from 0 to N-1, M is a positive integer greater than or equal to 1, and N is a positive integer greater than M; the first codebook subset configuration comprises a non-coherent codeword and a fully-coherent codeword, and the second codebook subset configuration comprise a non-coherent codeword, a partially-coherent codeword, and a fully-coherent codeword; and

the first codebook subset configuration corresponds to a non-coherent capability, and the first codebook subset configuration and the second codebook subset configuration correspond to a partially-coherent capability; and

a processor, configured to determine the value of the quantity of layers and a precoding matrix based on the transmission parameter indication information.

20. The device according to claim 19, wherein when any first index value m in the M first index values is the same as any second index value n in the N second index values, a value of a quantity of transmission layers and a precoding matrix indicator that correspond to the first index value m are the same as a value of a quantity of transmission layers and a precoding matrix indicator that correspond to the second index value n, and a precoding matrix associated with the precoding matrix indicator corresponding to the first index value m is the same as a precoding matrix associated with the precoding matrix indicator corresponding to the second index value n, wherein

the first index value m and the second index value n are non-reserved index values, and the non-reserved index value corresponds to a value of a quantity of transmission layers and a precoding matrix indicator; and

m is any natural number greater than or equal to 0 and less than M, and n is any natural number greater than or equal to 0 and less than N.

21. The device according to either claim 19 or 20, wherein the precoding matrix is determined based on the value of the quantity of transmission layers, an antenna configuration, a specific waveform, and the precoding matrix indicator.

22. The device according to any one of claims 19 to 21, wherein a correspondence among the index value, the value of the quantity of transmission layers, and the precoding matrix indicator satisfies one or more of the following tables:

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |
| … | … | … | … |
| 3 | 1 layer: TPMI=3 | 3 | 1 layer: TPMI=3 |
| 4 | 1 layer: TPMI=13 | 4 | 1 layer: TPMI=13 |
| 5 | 1 layer: TPMI=4 | | |
| … | … | | |
| 13 | 1 layer: TPMI=12 | | |
| 14 | 1 layer: TPMI=14 | | |
| 15 | 1 layer: TPMI=15 | | |

or

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |
| … | … | … | … |
| 3 | 1 layer: TPMI=3 | 3 | 1 layer: TPMI=3 |
| 4 | 2 layers: TPMI=0 | 4 | 2 layers: TPMI=0 |
| … | … | … | … |
| 9 | 2 layers: TPMI=5 | 9 | 2 layers: TPMI=5 |
| 10 | 3 layers: TPMI=0 | 10 | 3 layers: TPMI=0 |

| Field index value | Second codebook subset configuration | Field index value | First codebook subset configuration |
|---|---|---|---|
| 11 | 4 layers: TPMI=0 | 11 | 4 layers: TPMI=0 |
| 12 | 1 layer: TPMI=13 | 12 | 1 layer: TPMI=13 |
| 13 | 2 layers: TPMI=6 | 13 | 2 layers: TPMI=6 |
| 14 | 3 layers: TPMI=1 | 14 | 3 layers: TPMI=1 |
| 15 | 1 layer: TPMI=4 | | |
| … | … | | |
| 23 | 1 layer: TPMI=12 | | |
| 24 | 1 layer: TPMI=14 | | |
| 25 | 1 layer: TPMI=15 | | |
| 26 | 2 layers: TPMI=7 | | |
| … | … | | |
| 32 | 2 layers: TPMI=13 | | |
| 33 | 3 layers: TPMI=2 | | |
| 34 | 4 layers: TPMI=1 | | |
| 35 | 4 layers: TPMI=2 | | |

or

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |
| … | … | … | … |
| 3 | 1 layer: TPMI=3 | 3 | 1 layer: TPMI=3 |
| 4 | 2 layers: TPMI=0 | 4 | 2 layers: TPMI=0 |
| … | … | … | … |
| 9 | 2 layers: TPMI=5 | 9 | 2 layers: TPMI=5 |
| 10 | 1 layer: TPMI=13 | 10 | 1 layer: TPMI=13 |
| 11 | 2 layers: TPMI=6 | 11 | 2 layers: TPMI=6 |

| Field index value | Second codebook subset configuration | Field index value | First codebook subset configuration |
|---|---|---|---|
| 12 | 1 layer: TPMI=4 | | |
| … | … | | |
| 20 | 1 layer: TPMI=12 | | |
| 21 | 1 layer: TPMI=14 | | |
| 22 | 1 layer: TPMI=15 | | |
| 23 | 2 layers: TPMI=7 | | |
| … | … | | |
| 29 | 2 layers: TPMI=13 | | |

23. The device according to any one of claims 19 to 22, wherein
the transceiver is further configured to receive limitation information for a maximum quantity of transmission layers of a physical uplink shared channel PUSCH, wherein the limitation information for the maximum quantity of transmission layers is used to indicate a maximum quantity of transmission layers at which a second network device sends the PUSCH.

24. The device according to claim 23, wherein a value of the maximum quantity of transmission layers is one of 1, 2, 3, or 4.

25. The device according to claim 23 or 24, wherein for a same codebook subset configuration, index value sets corresponding to all values that are of the maximum quantity of transmission layers and that are greater than 2 are the same;

index value sets corresponding to a value 1 of the maximum quantity of transmission layers are different from index value sets corresponding to all values that are of the maximum quantity of transmission layers and that are greater than 1; and

index value sets corresponding to a value 2 of the maximum quantity of transmission layers are different from the index value sets corresponding to all the values that are of the maximum quantity of transmission layers and that are greater than 2.

26. The device according to any one of claims 19 to 25, wherein a value that corresponds to the index value indicated by the transmission parameter indication information and that is of the quantity of transmission layers is less than the value of the maximum quantity of transmission layers.

27. The device according to any one of claims 19 to 26, wherein when any fourth index value p in a fourth index value set corresponding to a value x of the maximum quantity of transmission layers is the same as any fifth index value q in a fifth index value set corresponding to a value y of the maximum quantity of transmission layers, a value of a quantity of transmission layers and a precoding matrix indicator that correspond to the fourth index value p are the same as a value of a quantity of transmission layers and a precoding matrix indicator that correspond to the fifth index value q, and a precoding matrix associated with the precoding matrix indicator corresponding to the fourth index value p is the same as a precoding matrix associated with the precoding matrix indicator corresponding to the fifth index value q, wherein

x and y are positive integers greater than X and less than or equal to K, p is any natural number greater than or equal to 0 and less than P, q is any natural number greater than or equal to 0 and less than Q, P is a quantity of index values comprised in the fourth index value set, Q is a quantity of index values comprised in the fifth index value set, and the fourth index value p and the fifth index value q are non-reserved index values.

28. A computer storage medium, storing a computer program, wherein when the program is executed by a processor, the method according to any one of claims 1 to 9 is implemented.

29. A computer program product comprising instructions, wherein when the computer program product runs on a computer, the computer is enabled to perform the method according to any one of claims 1 to 9.

30. A storage medium, storing a computer program, wherein when the program is executed by a processor, an access method is implemented:

receiving a field index; and

determining a quantity of transmission layers and a precoding matrix based on the field index and a first mapping relationship, wherein

the first mapping relationship is stored in the storage medium, and satisfies one or more of the following tables:

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |
| … | … | … | … |
| 3 | 1 layer: TPMI=3 | 3 | 1 layer: TPMI=3 |
| 4 | 1 layer: TPMI=13 | 4 | 1 layer: TPMI=13 |
| 5 | 1 layer: TPMI=4 | | |
| … | … | | |

| Field index value | Second codebook subset configuration | Field index value | First codebook subset configuration |
|---|---|---|---|
| 13 | 1 layer: TPMI=12 | | |
| 14 | 1 layer: TPMI=14 | | |
| 15 | 1 layer: TPMI=15 | | |

or

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |
| … | … | … | … |
| 3 | 1 layer: TPMI=3 | 3 | 1 layer: TPMI=3 |
| 4 | 2 layers: TPMI=0 | 4 | 2 layers: TPMI=0 |
| … | … | … | … |
| 9 | 2 layers: TPMI=5 | 9 | 2 layers: TPMI=5 |
| 10 | 3 layers: TPMI=0 | 10 | 3 layers: TPMI=0 |
| 11 | 4 layers: TPMI=0 | 11 | 4 layers: TPMI=0 |
| 12 | 1 layer: TPMI=13 | 12 | 1 layer: TPMI=13 |
| 13 | 2 layers: TPMI=6 | 13 | 2 layers: TPMI=6 |
| 14 | 3 layers: TPMI=1 | 14 | 3 layers: TPMI=1 |
| 15 | 1 layer: TPMI=4 | | |
| … | … | | |
| 23 | 1 layer: TPMI=12 | | |
| 24 | 1 layer: TPMI=14 | | |
| 25 | 1 layer: TPMI=15 | | |
| 26 | 2 layers: TPMI=7 | | |
| … | … | | |
| 32 | 2 layers: TPMI=13 | | |
| 33 | 3 layers: TPMI=2 | | |

| Field index value | Second codebook subset configuration | Field index value | First codebook subset configuration |
|---|---|---|---|
| 34 | 4 layers: TPMI=1 | | |
| 35 | 4 layers: TPMI=2 | | |

or

| Field index value | Second codebook subset configuration | Field index value | First codebook subset configuration |
|---|---|---|---|
| 0 | 1 layer: TPMI=0 | 0 | 1 layer: TPMI=0 |
| 1 | 1 layer: TPMI=1 | 1 | 1 layer: TPMI=1 |
| … | … | … | … |
| 3 | 1 layer: TPMI=3 | 3 | 1 layer: TPMI=3 |
| 4 | 2 layers: TPMI=0 | 4 | 2 layers: TPMI=0 |
| … | … | … | … |
| 9 | 2 layers: TPMI=5 | 9 | 2 layers: TPMI=5 |
| 10 | 1 layer: TPMI=13 | 10 | 1 layer: TPMI=13 |
| 11 | 2 layers: TPMI=6 | 11 | 2 layers: TPMI=6 |
| 12 | 1 layer: TPMI=4 | | |
| … | … | | |
| 20 | 1 layer: TPMI=12 | | |
| 21 | 1 layer: TPMI=14 | | |
| 22 | 1 layer: TPMI=15 | | |
| 23 | 2 layers: TPMI=7 | | |
| … | … | | |
| 29 | 2 layers: TPMI=13 | | |

FIG. 1

300

302

Send first transmission parameter control information based on a codebook subset configuration and an index value set corresponding to the codebook subset configuration

304

Receive the first transmission parameter control information, and decode the first transmission parameter control information based on the codebook subset configuration and the index value set corresponding to the codebook subset configuration

FIG. 2

400

402

Send second transmission parameter control information based on configuration information of an SRS resource

404

Receive the second transmission parameter control information based on the configuration information of the SRS resource

FIG. 3

900

```
┌─────────────────────┐
│  Transceiver module │
│         902         │
└──────────┬──────────┘
           │
┌──────────┴──────────┐
│  Processing module  │
│         904         │
└─────────────────────┘
```

FIG. 4

1000

```
Antenna
 1006    ▽ ┐
         . │  ┌──────────────┐              ┌──────────────┐
         . ├──│  Transceiver │              │   Processor  │
         . │  │     1004     │              │     1002     │
Antenna  ▽ ┘  └──────┬───────┘              └──────┬───────┘
 1006                │                              │
           ══════════╪══════════    Bus   ═════════╪════════════
                     │              1012           │
              ┌──────┴───────┐          ┌──────────┴────────────┐
              │ I/O interface│          │     Memory            │
              │     1010     │          │     1008              │
              └──────────────┘          │  ┌─────────────────┐  │
                                        │  │   Instructions  │  │
                                        │  │     10082       │  │
                                        │  └─────────────────┘  │
                                        │  ┌─────────────────┐  │
                                        │  │      Data       │  │
                                        │  │     10084       │  │
                                        │  └─────────────────┘  │
                                        └───────────────────────┘
```

FIG. 5

## INTERNATIONAL SEARCH REPORT

| International application No. |
| --- |
| **PCT/CN2020/124884** |

**A. CLASSIFICATION OF SUBJECT MATTER**

H04B 7/0456(2017.01)i; H04B 17/30(2015.01)i

According to International Patent Classification (IPC) or to both national classification and IPC

**B. FIELDS SEARCHED**

Minimum documentation searched (classification system followed by classification symbols)

H04B; H04W; H04L; H04Q

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 传输参数, 码本, 索引值, 相干, 完全, 非, 层数, 预编码, 矩阵, 子集, transmission, rank, indication, TRI, precoding, matrix, TPMI, index, codebook, ful+, coherent, non+, subset

**C. DOCUMENTS CONSIDERED TO BE RELEVANT**

| Category* | Citation of document, with indication, where appropriate, of the relevant passages | Relevant to claim No. |
| --- | --- | --- |
| X | CN 109167621 A (HUAWEI TECHNOLOGIES CO., LTD.) 08 January 2019 (2019-01-08) claims 1-30 and description, paragraphs [0117]-[0197] | 1-30 |
| X | SAMSUNG. "Codebook-Based UL Transmission" *3GPP TSG RAN WG1 Meeting #91 R1-1721399*, 01 December 2017 (2017-12-01), sections 2-6 | 1-30 |
| A | CN 101388752 A (DATANG MOBILE COMMUNICATIONS EQUIPMENT CO., LTD.) 18 March 2009 (2009-03-18) entire document | 1-30 |
| A | WO 2019028834 A1 (QUALCOMM INC.) 14 February 2019 (2019-02-14) entire document | 1-30 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 January 2021** | **27 January 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

International application No.

**PCT/CN2020/124884**

| Patent document cited in search report | | | Publication date (day/month/year) | Patent family member(s) | | | Publication date (day/month/year) |
|---|---|---|---|---|---|---|---|
| CN | 109167621 | A | 08 January 2019 | KR | 20200088480 | A | 22 July 2020 |
| | | | | CN | 109905154 | A | 18 June 2019 |
| | | | | EP | 3573409 | A1 | 27 November 2019 |
| | | | | CN | 109194377 | A | 11 January 2019 |
| | | | | CA | 3084841 | A1 | 13 June 2019 |
| | | | | CN | 111758289 | A | 09 October 2020 |
| | | | | WO | 2019109570 | A1 | 13 June 2019 |
| | | | | US | 2019181939 | A1 | 13 June 2019 |
| | | | | IN | 202047025537 | A | 11 September 2020 |
| CN | 101388752 | A | 18 March 2009 | KR | 20100054850 | A | 25 May 2010 |
| | | | | US | 2010278059 | A1 | 04 November 2010 |
| | | | | WO | 2009033365 | A1 | 19 March 2009 |
| | | | | IN | 201000486 | P3 | 06 August 2010 |
| WO | 2019028834 | A1 | 14 February 2019 | KR | 20200039683 | A | 16 April 2020 |
| | | | | CN | 110999476 | A | 10 April 2020 |
| | | | | EP | 3666010 | A1 | 17 June 2020 |
| | | | | WO | 2019029697 | A1 | 14 February 2019 |
| | | | | IN | 202047001130 | A | 14 February 2020 |
| | | | | JP | 2020529792 | W | 08 October 2020 |
| | | | | BR | 112020002373 | A2 | 01 September 2020 |
| | | | | SG | 11202000164 | A1 | 27 February 2020 |

Form PCT/ISA/210 (patent family annex) (January 2015)